# EUROPÄISCHE PATENTSCHRIFT

(11) **EP 2 838 136 B1**
(45) Veröffentlichungstag und Bekanntmachung des Hinweises auf die Patenterteilung: **21.03.2018**
(21) Anmeldenummer: 14002682.4
(22) Anmeldetag: 31.07.2014
(51) Int. Cl.: H01M 2/14, H01M 2/16, H01M 6/36

(54) **Ionendosiervorrichtung für eine Energiespeichervorrichtung, Verfahren zum Herstellen einer Ionendosiervorrichtung und Energiespeichervorrichtung**
Ion dosing device for an energy storage device, method for producing an ion dosing device and energy storage device
Dispositif de dosage d'ions pour un dispositif de stockage d'énergie, procédé de fabrication d'un dispositif de dosage d'ions et dispositif de stockage d'énergie

(30) Priorität: 12.08.2013 DE 102013013295
(43) Veröffentlichungstag der Anmeldung: 18.02.2015
(73) Patentinhaber: Airbus Defence and Space GmbH, 85521 Ottobrunn (DE)
(72) Erfinder: Ohnesorge, Alexander, 85649 Brunnthal (DE); Pilawa, Michael, 80807 München (DE); Steinwandel, Jürgen, 88690 Uhldingen-Mühlhofen (DE); Hofmann, Michael, 85579 Neubiberg (DE); Kaiser, Alexander, 78669 Wellendingen (DE)
(74) Vertreter: LKGLOBAL Lorenz & Kopf PartG mbB Patentanwälte

(56) Entgegenhaltungen:
- GB-A- 191 123 265
- US-A- 4 898 602
- US-A1- 2005 201 715
- US-A1- 2012 237 816
- US-B1- 6 326 105

## Beschreibung

Die vorliegende Erfindung betrifft das technische Gebiet von Energiespeichervorrichtungen. Insbesondere betrifft die vorliegende Erfindung eine lonendosiervorrichtung für eine Energiespeichervorrichtung, ein Verfahren zum Herstellen einer Ionendosiervorrichtung für eine Energiespeichervorrichtung und eine Energiespeichervorrichtung.

### Hintergrund der Erfindung

Batterien oder Akkumulatoren weisen eine Selbstentladung auf, die dazu führt, dass eine solche Batterie nur beschränkt lagerfähig ist. Die Selbstentladung kann bei heute kommerziell erhältlichen Zellen beispielsweise bei 1 % der Zellkapazität pro Monat liegen. Wegen dieser hohen Selbstentladung können solche Batterien nicht oder nur eingeschränkt in Fällen eingesetzt werden, in denen die Batterien vor ihrem Einsatz über einen langen Zeitraum eingelagert werden müssen, ohne dass die Batterien während der Lagerung weiter konditioniert werden. Somit erschwert die hohe Selbstentladung eine Lagerung von zehn Jahren und länger.

Es existieren Thermalbatterien, die jedoch nur eine kurze Betriebsdauer in der Größenordnung von wenigen Minuten erlauben.

Die Druckschrift EP 0 291 459 A2 beschreibt ein Verfahren zur abtragenden Bearbeitung von optischen Körpern aus vernetzten Polymeren.

Die Druckschrift WO 90/02327 beschreibt Maßnahmen zur Beeinflussung einer Empfindlichkeit und Selektivität von lonenkanalmembranbiosensoren.

Die Druckschrift US 2012/0237816 A1 betrifft eine Bipolar Batterie mit einem Substrat, welches eine Matrix aus einem Duroplast Polymer aufweist.

Die Druckschrift GB 23,265 A.D. 1911 betrifft ein Aluminiumgitter für die Elektroden eines elektrischen Akkumulators.

Die Druckschrift US 2005/0201715 A1 betrifft ein System für eine magnetooptische Geräteanzeige.

Die Druckschrift US 6,326,105 B1 betrifft einen Polymerelektrolyt-Verbundwerkstoff für elektrochemische Alkalimetallvorrichtungen, der durch Beschichtung eines inerten, leichten, elektrisch isolierenden, nicht-gewebten Glasfaser-Netz, das ein Polyvinylalkohol-Bindemittel enthält, mit einem flüssigen Polymer, das ionisch leitend sein kann, und das Aushärten des Polymers gebildet wird, um einen festen oder halbfesten Elektrolytverbundwerkstoff zu bilden.

Die Druckschrift US 4,898,602 betrifft eine selektiv öffenbare Anordnung.

Es ist eine Aufgabe der Erfindung, eine verbesserte und sichere Energiespeicherung zu ermöglichen.

### Zusammenfassung der Erfindung

Diese Aufgabe wird gemäß den Gegenständen der unabhängigen Patentansprüche gelöst. Weiterbildungen der Erfindung sind in den abhängigen Patentansprüchen angegeben.

Dementsprechend wird eine lonendosiervorrichtung für eine Batterie, ein Verfahren zum Herstellen einer lonendosiervorrichtung für eine Energiespeichervorrichtung und eine Energiespeichervorrichtung geschaffen.

Eine Energiespeichervorrichtung kann nicht nur zum Speichern von Energie genutzt werden. Nach dem Aktivieren der Energiespeichervorrichtung setzt die Energiespeichervorrichtung die in ihr gespeicherte Energie frei und kann als Energieliefervorrichtung oder als Generator genutzt werden, beispielsweise um einen Stromkreis zu betreiben. Das Aktivieren kann Komponenten der Energiespeichervorrichtung, wie beispielsweise eine Ionendosiervorrichtung oder die in der Ionendosiervorrichtung enthaltene Trenneinrichtung, in einen elektrisch leitfähigen Zustand und/oder in einen ionisch leitfähigen Zustand versetzen.

Gemäß einem Aspekt der vorliegenden Erfindung wird eine lonendosiervorrichtung für eine Batterie beschrieben. Die lonendosiervorrichtung weist eine erste Energieleiteinrichtung mit einer ersten Energiezufuhreinrichtung und einer Trenneinrichtung auf. Über die erste Energiezufuhreinrichtung kann der ersten Energieleiteinrichtung eine erste Energie für die lonendosiervorrichtung zugeführt werden.

Die Trenneinrichtung ist eingerichtet, in einem ersten Zustand der Ionendosiervorrichtung, in dem keine Energie über die erste Energiezuführeinrichtung zugeführt wird, Ionen zu blockieren, die an der ersten Energieleiteinrichtung vorbei transportiert würden. In einem Beispiel weist die lonendosiervorrichtung die Energieleiteinrichtung und eine Trenneineinrichtung oder eine Barriereeinrichtung auf, beispielsweise eine Barriereschicht, die einen Ladungsträgertransport im Wesentlichen nur gestattet, wenn die Trenneinrichtung zerstört oder deren Ionenleitfähigkeit eingestellt worden ist.

Die erste Energieleiteinrichtung ist eingerichtet, die Transportrichtung der ersten Energie vorzugeben, um die erste Energie an eine im Wesentlichen vorgebbare Position der Trenneinrichtung innerhalb der lonendosiervorrichtung zu führen und an dieser Position die erste Energie innerhalb der lonendosiervorrichtung an die Trenneinrichtung abzugeben. In einem Beispiel gibt die Energieleiteinrichtung die Energie über die gesamte Länge der Energieleiteinrichtung ab. In einem anderen Beispiel kann die Energieabgabe mittels einer Auskoppeleinrichtung an einer bestimmten Position erreicht werden, beispielsweise durch die Strukturierung von Gradienten einer Gradienten-Lichtleitfaser.

In einem zweiten Zustand der Ionendosiervorrichtung, in dem die erste Energie über die erste Energiezuführeinrichtung zugeführt wird, bestimmt die Menge oder Größe der abgegebenen ersten Energie die Anzahl der von der Trenneinrichtung an der ersten Energieleiteinrichtung (102a, 103a, 104a, 105a, 106a) vorbei transportierten Ionen und/oder die Anzahl der von der Trenneinrichtung durchgelassenen Ionen. Somit bestimmt die Menge der abgegebenen ersten Energie die Ionenstromflussdichte durch die Trenneinrichtung, insbesondere die lonenstromflussdichte an der ersten Energieleiteinrichtung vorbei oder um die erste Energieleiteinrichtung herum. Indirekt bestimmt die aus einer Energiequelle zugeführte Energie die Menge der abgegebenen Energie und somit die Anzahl transportierter bzw. durchgelassener Ionen.

An der vorgebbaren Position der Ionendosiervorrichtung, zu der die erste Energie geführt wird, wirkt im Wesentlichen der Großteil der transportierten Energie auf die Trenneinrichtung ein. Die Trenneinrichtung kann passend zu der verwendeten Energieform gewählt werden, so dass die von der Energieleiteinrichtung freigegebene Energie mit der Trenneinrichtung zusammenwirkt, wechselwirkt oder von der Trenneinrichtung absorbiert wird. Das Wechselwirken oder das Absorbieren der Energie kann zu einer Wirkung in der Trenneinrichtung führen, die zu einer Veränderung der Transportfähigkeit für Ionen führt. Die Wahl der Trenneinrichtung, insbesondere die Wahl des Materials der Trenneinrichtung, kann somit von der verwendeten Energieform für die erste Energie abhängen. Dabei ist die Trenneinrichtung bzw. die Barriereschicht so ausgewählt, dass im Wesentlichen die gesamte über die Energieleiteinrichtung bereitgestellte Energie aufgenommen werden kann. Wird beispielsweise als erste Energie eine optische Energie in Form einer Laserstrahlung gewählt, so kommt als Trenneinrichtung innerhalb der Ionendosiervorrichtung ein photochemisch zersetzbares Polymer zum Einsatz. In einem weiteren Beispiel ist das photochemisch zersetzbare Polymer auf eine bestimmte Wellenlänge der Laserstrahlung abgestimmt, so dass eine maximale Zersetzung bei einer definierten Wellenlänge stattfindet.

Die Energie kann über die gesamte Länge der Energieleiteinrichtung abgegeben werden. Durch spezielle Maßnahmen, wie das Vorsehen einer Ummantelung, kann die Energieabgabe an bestimmten Positionen, an denen keine Energieabgabe erwünscht wird, unterbunden werden. Auch kann die Energieabgabe durch geeignete Modifikationen der Energieleiteinrichtung, wie das Vorsehen einer Strukturierung, gefördert werden. In einem Beispiel werden in eine Gradienten-Lichtleitfaser Strukturen eingebracht, die eine partielle Auskopplung der Strahlung an definierten Positionen hervorrufen. Durch eine solche Modifikation kann die Position bestimmt werden, an der die erste Energie an die Trenneinrichtung abgegeben wird.

Die Trenneinrichtung mag eingerichtet sein, eine Anzahl von Ionen, die um die erste Energieleiteinrichtung herum transportiert und/oder blockiert werden, über die zugeführte Energie zu kontrollieren.

Unter "Herumtransportieren" mag auch verstanden werden, dass Ionen an der Energieleiteinrichtung vorbeitransportiert werden, insbesondere, dass die Ionen durch Zwischenräume, die von der Energieleiteinrichtung oder von einer Vielzahl von Energieleiteinrichtungen gebildet werden, hindurch transportiert werden.

Gemäß einem weiteren Aspekt der vorliegenden Erfindung wird ein Verfahren zum Herstellen einer lonendosiervorrichtung für eine Energiespeichervorrichtung beschrieben. Das Verfahren weist das Bereitstellen einer ersten Energieleiteinrichtung und einer ersten Energiezufuhreinrichtung auf, wobei die erste Energiezufuhreinrichtung an der ersten Energieleiteinrichtung angeordnet sein kann. Über die erste Energiezufuhreinrichtung ist der ersten Energieleiteinrichtung eine erste Energie zuführbar. Somit kann die erste Energiezufuhreinrichtung das Einkoppeln einer ersten Energie in die erste Energieleiteinrichtung ermöglichen, beispielsweise das Einkoppeln aus einer Energiequelle.

Die bereitgestellte erste Energieleiteinrichtung wird mit einer Trenneinrichtung umgeben, mittels derer ein Ionentransport verhindert werden kann, oder aber die erste Energieleiteinrichtung wird in die o.g. Trenneinrichtung eingebettet. Die Energiezufuhreinrichtung in Kombination mit der Energieleiteinrichtung und der Trenneinrichtung bilden die lonendosiervorrichtung. In einem Beispiel wird die Energieleiteinrichtung so in einer Ebene verlegt, dass durch die Form der Verlegung Öffnungen zwischen der Energieleiteinrichtung entstehen. Diese Öffnungen mögen beispielsweise von einer Vielzahl erster Energieleiteinrichtungen durch paralleles oder gitterförmiges Anordnen von zumindest zwei Energieleiteinrichtungen und/oder durch ein schleifenförmiges Verlegen von einer einzigen ersten Energieleiteinrichtung entstehen. Die Öffnungen, welche in Zwischenräumen der ersten Energieleiteinrichtung vorhanden sind, werden mit der Trenneinrichtung innerhalb der lonendosiervorrichtung verschlossen. Die lonendosiervorrichtung bzw. deren Trenneinrichtung kann als Trennmedium oder Barriereschicht für eine Ionentransporteinrichtung genutzt werden, z.B. für einen Elektrolyten innerhalb einer Batterie. Der Elektrolyt mag in Verbindung mit einem Separator genutzt werden. Die lonendosiervorrichtung bzw. deren Trenneinrichtung kann wegen ihrer Trennwirkung einen Ionentransport im Wesentlichen blockieren, insbesondere, wenn die lonendosiervorrichtung und/oder die Trenneinrichtung nicht mit der Ionentransporteinrichtung reagiert. In einem Beispiel kann innerhalb der lonendosiervorrichtung eine vorgebbare Anzahl an Ionen um die Energieleiteinrichtung herumgeführt oder an der Energieleiteinrichtung vorbei geführt werden. Die Anzahl der Ionen, die innerhalb der lonendosiervorrichtung transportiert werden, wird dabei durch die durch die Energieleiteinrichtung an die Trenneinrichtung abgegebene Energiemenge bzw. die Form der zugeführten Energie bestimmt. Zum Führen der Ionen kann die lonendosiervorrichtung Ionen von einer Ionentransporteinrichtung empfangen oder Teil der lonentransporteinrichtung sein. Zum Führen der Ionen mag ein einem Beispiel ein lonenkanal genutzt werden.

Das Umgeben der ersten Energieleiteinrichtung innerhalb der Ionendosiervorrichtung mit der Trenneinrichtung erfolgt der Art, dass die Trenneinrichtung eingerichtet ist, in einem ersten Zustand, in dem keine Energie über die erste Energiezuführeinrichtung zugeführt wird, Ionen, die an der ersten Energieleiteinrichtung vorbei transportiert würden, zu blockieren, beispielsweise durch Blockieren einer Ionentransporteinrichtung oder durch das Dosieren der Anzahl beweglicher Ionen in der Trenneinrichtung. Für die Zuführbarkeit der ersten Energie wird die erste Energiezuführeinrichtung mit der ersten Energieleiteinrichtung verbunden. Die erste Energieleiteinrichtung ist eingerichtet, die Transportrichtung der ersten Energie vorzugeben, um die erste Energie an eine vorgebbare Position der Trenneinrichtung innerhalb der lonendosiervorrichtung zu führen und an dieser Position die erste Energie an die Trenneinrichtung abzugeben.

Ferner erfolgt das Umgeben der ersten Energieleiteinrichtung mit der Trenneinrichtung so, dass in einem zweiten Zustand, in dem die erste Energie über die erste Energiezuführeinrichtung zugeführt wird, die Menge der abgegebenen ersten Energie die Anzahl der von der Trenneinrichtung an der ersten Energieleiteinrichtung vorbei transportierten Ionen bestimmt und/oder die Anzahl der von der Trenneinrichtung durchgelassenen Ionen bestimmt.

Durch den Wechsel von dem ersten Zustand in den zweiten Zustand und umgekehrt kann die lonendosiervorrichtung zwischen einem blockierten Zustand und einem leitfähigen Zustand geschaltet werden. Der erste Zustand mag einem Ruhezustand oder Lagerzustand entsprechen. Der zweite Zustand mag einem aktivierten Zustand entsprechen.

Gemäß einem weiteren Aspekt der vorliegenden Erfindung wird eine Energiespeichervorrichtung, beispielsweise eine Batterie oder ein Akkumulator beschrieben. Die Energiespeichervorrichtung weist eine erste Elektrode, eine zweite Elektrode und eine Ionentransporteinrichtung sowie die erfindungsgemäße lonendosiervorrichtung auf. Die lonendosiervorrichtung steht mit der Ionentransporteinrichtung in Kontakt, um eine von der Ionentransporteinrichtung transportierte Anzahl an Ionen zu kontrollieren. Beim Kontrollieren kann die Anzahl der transportierten Ionen über die zugeführte Energiemenge gesteuert werden. In einem Beispiel kann durch den Wechsel zwischen dem ersten und zweiten Zustand ein Schalten der lonendosiervorrichtung realisiert werden. Beim Schalten mag es auf die Anzahl der transportierten Ionen im Wesentlichen nicht ankommen, sondern nur darauf, ob Ionen transportiert werden und möglicherweise, ob die Anzahl transportierter Ionen einen vorgegebenen Schwellwert übersteigt. Die lonendosiervorrichtung ist zwischen der ersten Elektrode und der zweiten Elektrode angeordnet. In einem Beispiel kann die erste Elektrode eine Anode und die zweite Elektrode eine Kathode sein und die Ionentransporteinrichtung kann ein Elektrolyt, auch in Verbindung mit einem Separator sein.

Die Energiespeichervorrichtung oder die Energiefreigabevorrichtung weist zumindest drei Anschlüsse auf, nämlich die erste Elektrode, die zweite Elektrode und die Energiezufuhreinrichtung zum Aktivieren und/oder zum Kontrollieren der Inendosiereinrichtung bzw. der darin enthaltenen Trenneinrichtung. Die der Ionendosiervorrichtung zugeführte Energie kann im Wesentlichen ohne Umwandlung in eine andere Energieform auf die Trennvorichtung einwirken. Beispielsweise wirkt die zugeführte Lichtenergie direkt auf die Trennvorrichtung ein. Ähnlich einem Feldeffekttransistor, wird die Leitfähigkeit des Materials der Trenneinrichtung durch die Energiezufuhr beeinflusst Die Energiezufuhreinrichtung kann als Steuereinrichtung für den zwischen den Elektroden transportierten lonenstrom angesehen werden. Der Ionentransistor mag in einem Beispiel im Wesentlichen innerhalb einer Spannungsquelle oder Energiespeichervorrichtung wirken. Beispielsweise wird die Ionenleitfähigkeit des Materials der Trenneinrichtung mittels Lichtenergie oder mittels der Energie eines elektrischen Feldes gezielt verändert. Folglich kann die erfindungsgemäße Energiespeichervorrichtung als ein lonentransistor bezeichnet werden. Die Trenneinrichtung kann als dünne Folie oder als ein Schichtensystem ausgeführt sein. Die Eigenschaft der Folie oder Membran kann zur lonenschaltung und Ionendosierung mittels eines elektrischen Feldes beeinflusst werden. Die lonendosiervorrichtung kann zum Dosieren oder Schalten von lonenströmen genutzt werden. In einem Beispiel kann die Ionenleitfähigkeit der Folie oder der Membran über die Beeinflussung eines lonenkanals mittels eines elektrostatischen Feldes moduliert und auf diese Weise verändert werden. Insbesondere mag ein feldmodulierter polymerer lonenkanal einsetzbar sein, der durch die Kombination von Monomeren, z.B. Alamethicin und Gramicidin, ensteht, und durch ein angelegtes elektrostatisches Feld assembliert, deformiert oder zerstört werden kann, wodurch sich die Ionenleitfähigkeit modulieren lässt.

Gemäß einem weiteren Aspekt der vorliegenden Erfindung wird ein Flugkörper angegeben, welcher eine Energiespeichervorrichtung mit der lonendosiervorrichtung aufweist.

Eine lange Lagerfähigkeit ist insbesondere im militärischen Anwendungsbereich gefordert. Beispielsweise wird eine lange Lagerfähigkeit von Batterien oder Akkumulatoren gefordert, welche in militärischen Flugkörpern verbaut werden. Eine lange Lagerfähigkeit von Batterien kann mit sog. Thermalbatterien erreicht werden, die bis zu ihrem Einsatz elektrisch inaktiv sind, da der Elektrolyt, insbesondere der Separator, in der Zelle erst bei einer Aktivierung der Batterie, der Zelle oder des Akkumulators ionisch leitend wird, wodurch die elektrische Funktionsfähigkeit der Batterie hergestellt werden kann. Die ionische Leitfähigkeit kann durch die unkontrollierte Erhitzung des Elektrolyten hergestellt werden, beispielsweise mittels eines pyrotechnischen Treibsatzes. Eine Thermalbatterie weist lediglich eine kurze Betriebsdauer in der Größenordnung von wenigen Minuten auf, da ein Elektrolyt, der durch pyrotechnische Erhitzung aktiviert wird, zeitlich nur begrenzt für Ionen leitfähig bleibt. Außerdem weisen Thermalbatterien im Vergleich zu anderen Batteriesystemen, z.B. zu Li-Ionen-Zellen (Lithium-Ionen-Zellen), eine relativ geringe spezifische Energiedichte auf. Die Energiedichte ist jedoch ein Parameter, der in einer Vielzahl von Anwendungen eine zentrale Rolle spielt. Denn beispielsweise nimmt der Energiebedarf von einzelnen Verbrauchern oder auch die Anzahl von Verbrauchern in einer Vielzahl von Anwendungen stetig zu.

Des Weiteren kann es in Batteriesystemen zu Sicherheitsproblemen kommen, welche beispielsweise durch zu hohe Stromflüsse verursacht werden, welche dementsprechend hohe ionische Ströme im Inneren der Batterie verursachen. Dabei kann es in einigen Batteriekonfigurationen zur Beschädigung von Grenzschichten kommen und in der Folge beispielsweise zu einer Dendritenbildung und zur thermischen Beschädigung der Zelle.

Mit Hilfe der Trenneinrichtung kann eine Energiespeichervorrichtung in der die lonendosiervorrichtung eingesetzt wird, nach Bedarf aktiviert werden, auch nach einer langen Zeit. Es kann als ein Aspekt der vorliegenden Erfindung angesehen werden, die ionische Leitfähigkeit einer Trenneinrichtung, Barriereschicht oder eines Separators,z.B. einer Separatormembran, mittels zugeführter Energie zu kontrollieren, zu ändern, zu steuern oder zu dosieren. Die ionische Leitfähigkeit kann beispielsweise in Abhängigkeit von der zugeführten Energiemenge bzw. der zugeführten Energieform kontrolliert werden, beispielsweise in Abhängigkeit der Strahlungsintensität, Wellenlänge und Einstrahldauer. Die Trenneinrichtung oder die Barriereschicht kann in einer Separatoreinrichtung oder Separatormembran eingebaut sein, die in einer Energiespeichervorrichtung vorhandenen ist, um beispielsweise Aktivmaterialien voneinander zu trennen. Alternativ kann die Trenneinrichtung als eine zusätzliche Barriereschicht zu der Separatormembran einer Batterie oder eines Akkumulators angewendet werden. Somit kann die Ionendosiervorrichtung mit ihrer Trenneinrichtung als ein schaltbarer Separator oder als ein steuerbarer Separator angesehen werden. Insbesondere kann eine entsprechende lonendosiervorrichtung mit der zugehörigen Trenneinrichtung auch als schaltbarer Separator für eine Batterie oder für einen Akkumulator bezeichnet werden.

Die lonendosiervorrichtung, der schaltbare Separator, die zusätzliche Barriereschicht der lonendosiervorrichtung oder die zusätzliche Separatormembran kann ein Netz aus Energieleiteinrichtungen aufweisen, beispielsweise ein Netz aus Lichtleitfasern. Jede einzelne der verwendeten Energieleiteinrichtungen kann eine hohe Verlustleistung für den Transport der gewählten Energie in Transportrichtung aufweisen, so dass ein Großteil der Energie in einen Außenbereich der Energieleiteinrichtung abgegeben wird. Wegen dieser hohen Verlustleistung kann im Wesentlichen ein Großteil der transportieren Energie, von der Energieleiteinrichtung an die Trenneinrichtung abgegeben werden. Die Energie kann von einer optischen Strahlung, einer Mikrowelle, einer beliebigen anderen elektromagnetischen Strahlungsform, einem elektrischen Strom, einem magnetischen Feld, einem elektrischen Feld, einem elektrostatischen Feld, einem magnetischen Feld oder auch als thermische Strahlung transportiert werden. In einem Beispiel, bei Einbringung von Strahlungsenergie im optischen Bereich, erfolgt die Energieabgabe von der Energieleiteinrichtung an die Trenneinrichtung der lonendosiervorrichtung über die in eine Gradienten-Lichtleitfaser eingebrachten Strukturen, die zum verstärkten Auskoppeln eines Teils der Strahlung an der Position führen, an der die Strukturen angeordnet sind. In einem anderen Beispiel, bei Teiltransparenz der Lichtleitfaser, erfolgt die Auskopplung der Strahlung über Verluste bei der Reflexion der Strahlung im inneren des Lichtleiters. In noch einem anderen Beispiel erfolgt die Auskopplung über ein elektrisches Feld.

Die Trenneinrichtung oder Barriereschicht kann die Energieleiteinrichtung ummanteln, so dass die Energieleiteinrichtung im Wesentlichen vollständig von der Trenneinrichtung umgeben ist. Die bei einer schleifenförmigen Verlegung oder bei einer gitterförmigen Verlegung der Energieleiteinrichtung entstehende Öffnungen mögen somit im Wesentlichen mit der Trenneinrichtung verschlossen werden. Die Kombination aus Energieleiteinrichtung und Trenneinrichtung kann eine Ionendosiervorrichtung formen, die in eine Energiespeichervorrichtung eingebracht werden kann. Jede andere dreidimensionale Form neben der Schichtform ist ebenfalls denkbar. Ein Beispiel für eine Trenneinrichtung kann ein photochemisch zersetzbares Polymer sein. Dieses kann auf die Wellenlänge einer bestimmten Laserstrahlung reagieren und zersetzt werden. Im Falle eines photochemisch zersetzbaren Polymers kann eine Lichtleitfaser oder ein optischer Leiter als Energieführeinrichtung genutzt werden, um die Laserstrahlung durch die Trenneinrichtung der lonendosiervorrichtung zu führen. In weiteren Ausführungsbeispielen sind auch andere Strahlungsformen denkbar, wie sichtbares Licht, UV (Ultraviolett)-Strahlung, und IR (Infrarot)-Strahlung, die mit den entsprechenden Leitern geführt werden. Die Form der Führung kann die Wirkung der photochemischen Reaktion erhöhen. In dem Fall, dass die lonendosiervorrichtung aus einer Lichtleitfaser und einem photochemisch zersetzbaren Polymer gebildet wird, kann die Lichtleitfaser mit dem photochemisch zersetzbaren Polymer ummantelt sein bzw. mit einem Polymer, dessen chemisch-physikalische Eigenschaften mittels spezifischer Strahlung definiert eingestellt werden kann. Als chemisch-physikalische Eigenschaft des Polymers kann die Ionenleitfähigkeit eines solchen Polymers bezeichnet werden. Ein Polymer, dessen chemisch-physikalische Eigenschaft mittels spezifischer Strahlung gezielt eingestellt oder dosiert werden kann bzw. ein photochemisch zersetzbares Polymer ist ein Beispiel für die Trenneinrichtung einer Ionendosiervorrichtung, die mit einer entsprechenden Energieform wechselwirkt, welche in der Energieleiteinrichtung geführt wird und aus ihr austritt.

Aus einer Energiequelle wird der Energieleiteinrichtung Energie zugeführt. Die Kombination des verwendeten Materials für die Trennvorrichtung und die eingesetzte Energiequelle und damit die genutzte erste Energieleiteinrichtung und/oder die zweite Energieleiteinrichtung mag im optischen Fall so gewählt werden, dass die Photonenergie der eingesetzten Laserstrahlung, beispielsweise eines Eximerlasers, größer als die Bindungsenergie der kovalenten Bindungen im Polymer der Trenneinrichtung ist.

Als Polymer kann ein Hydroxy-substituiertes Niederalkylacrylat oder -methyacrylat zum Einsatz kommen, das mit Ethylglykoldimethaacrylat, Ethylenglykoldimethacrylat oder Divinylbenzol vernetzt ist. Ferner kann ein vernetztes Polymer mit folgenden kovalenten Hauptbindungen eingesetzt werden, z.B. Kohlenstoff-Kohlenstoff, Kohlenstoff-Stickstoff, Kohlenstoff-Sauerstoff, Silizium-Kohlenstoff und/oder Silizium-Sauerstoff. Ein vernetztes Polymer ist im Wesentlichen ein dreidimensionales Netzwerk.

Die Polymere werden insbesondere so ausgewählt, dass weder die verwendeten Polymere noch die entstehenden Zersetzungsprodukte mit den Inhaltsstoffen bzw. den Komponenten des Energiespeichervorrichtung so reagieren, dass eine solche Reaktion und/oder dabei entstehende Reaktionsprodukte nachteilig hinsichtlich der Funktionalität des Energiespeichers sind, beispielsweise die lonenleitfähigkeit beeinträchtigen.

Die Effektivität der Strahlung beim Zersetzen mag erhöhbar sein, wenn eine kohärente Strahlung eingesetzt wird.

In einem weiteren Beispiel kann die lonenleitfähigkeit der Trenneinrichtung durch ein durch eine Energiezufuhreinrichtung und eine Energieleiteinrichtung eingebrachtes elektromagnetisches Feld gezielt eingestellt werden. Durch die Energiezuführung kann die lonendosiervorrichtung zum Schalten oder Steuern von Ionenströmen genutzt werden. Für die Trenneinrichtung können Folien oder andere dünnen Schichtsysteme eingesetzt werden. Diese erlauben bei Energiezufuhr einen lonenstrom und sind chemisch beständig und/oder inert gegenüber denjenigen Stoffen, die mit der Trenneinrichtung in Kontakt kommen und die ein Bestandteil der Energiespeichervorrichtung sind.

Mittels der beschriebenen Trenneinrichtung kann eine Energiespeichervorrichtung gegen Selbstentladung geschützt werden und die Zeit, bis die Energie aus der Energiespeichervorrichtung geliefert werden soll, kann erhöht werden. Folglich kann die Lagerdauer oder der Bereitstellungszeitraum erhöht werden. Durch das gezielte Steuern oder das gezielte Dosieren von transportierten Ionen in der Trenneinrichtung kann es auch möglich sein, einen Innenwiderstand der Energiespeichervorrichtung zu verändern, so dass eine gesteuerte Energiequelle realisierbar wird. Denkbar ist beispielsweise eine Steuerung oder Regulierung der fließenden elektrischen Ströme im Fehlerfall durch eine Dosierung des lonenstroms innerhalb der Energiespeichervorrichtung.

Gemäß einem weiteren Aspekt der vorliegenden Erfindung ist die Ionendosiervorrichtung als Sicherungsvorrichtung für einen möglichen Fehlerfall eingerichtet. Dabei wird im Falle eines Fehlers im Energiespeichersystem oder in der Energiespeichereinrichtung der lonenstrom in der Zelle unterbrochen und die Energieabgabe der Energiespeichervorrichtung unterbunden, beispielsweise durch das Blockieren des Ionenstroms. Das Blockieren des lonenstroms kann durch das Abschalten oder das Anschalten der elektrischen Energie erfolgen. Es besteht die Möglichkeit, Energiespeichervorrichtungen mit der lonendosiervorrichtung so zu verschalten, dass durch mindestens eine oder aber auch durch eine Vielzahl solcher Energiespeichervorrichtungen mit einer lonendosiervorrichtung leistungselektronische Aufgaben übernommen werden können, z.B. eine Drehzahlregelung von Motoren oder eine Signalformung. Die lonendosiervorrichtung kann als ein elektro-chemischer oder/und elektro-optischen Transistor bezeichnet werden. Dabei wirkt dieser Transistor im Wesentlichen innerhalb der Energiequelle. Die Ionendosiervorrichtung mag ein geregelter Widerstand für einen lonenstrom sein.

Gemäß einem weiteren Aspekt der vorliegenden Erfindung ist die Ionendosiervorrichtung so eingerichtet, dass nur für die Dauer des Energieeintrages durch die Energieleiteinrichtung ein lonenstrom innerhalb der Zelle möglich ist. Dabei wird im Falle eines Fehlers im Energiespeichersystem der lonenstrom dadurch unterbrochen, dass die externe Energiezufuhr gestoppt wird.

Da durch das zusätzliche Einbringen der Trenneinrichtung die Lagerfähigkeit von im Wesentlichen jeder Batterie oder Energiespeichervorrichtung erhöht werden kann, die einen Ionentransport zum Freisetzen der gespeicherten Energie nutzt, kann eine große Bandbreite von Batterietypen, beispielsweise Hochenergie-Li-Ionenbatterien, so verändert werden, dass sie in speziellen Langzeitanwendungen eingesetzt werden können. So wird es möglich unterschiedliche existierende Batterietypen so anzupassen, dass sie in Fällen eingesetzt werden können, in denen eine gute Lagerfähigkeit und eine schnelle Einsatzbereitschaft erforderlich ist. Beispielsweise können so Batterien mit im Vergleich zu Thermalbatterien erhöhten Energiedichten für Flugkörper eingesetzt werden. Oft kann es ausreichen, bei einer herkömmlichen Batterie lediglich den vorhandenen Separator durch den schaltbaren Separator, also die londosiervorrichtung, zu ersetzen, wobei für diesen Einsatzfall die lonendosiervorrichtung das Separatormaterial des vorhandenen Separators, das im Wesentlichen nicht mit der ersten Energie beeinflussbar ist, zusätzlich zu der Trenneinrichtung aufweisen kann. Batterietypen mit im Vergleich zu Thermalbatterien erhöhten Energiedichten können für eine Verlängerung der Betriebsdauer im Rahmen der betreffenden Anwendung sorgen oder den Einsatz dieser Form der Energiespeicherung bzw. entsprechender Verbraucher erst ermöglichen. Im Falle von Flugkörpern kann eine verbesserte spezifische Energiedichte der eingesetzten Energiespeicher zu einer relevanten Gewichtsreduktion führen, welche diverse Vorteile hinsichtlich des Systemdesigns zur Folge haben kann, und welche ein gutes Systemdesign unterstützt.

Gemäß einem weiteren Aspekt der vorliegenden Erfindung wird in dem ersten Zustand, in dem keine Energie zugeführt wird, die Anzahl an Ionen transportiert und/oder durchgelassen und in dem zweiten Zustand, in dem die erste Energie zugeführt wird, wird der Ionentransport blockiert.

Somit mag ohne Energiezuführung ein leitfähiger Zustand hergestellt werden und bei Energiezuführung ein blockierter Zustand.

Gemäß einem weiteren Aspekt der vorliegenden Erfindung wird die Anzahl der transportierten Ionen über die Apertur von zumindest einer Öffnung für einen Ionentransport in der ersten Energieleiteinrichtung und/oder über die Veränderung einer lonenleitfähigkeit der Trenneinrichtung innerhalb der lonendosiervorrichtung beeinflusst. Alternativ kann die zumindest eine Öffnung für einen Transportweg in der lonendosiervorrichtung verändert werden, um die Anzahl der transportierten Ionen zu kontrollieren. Beispielsweise mag die Öffnung eines lonenkanals verändert werden.

Die zumindest eine Öffnung oder der zumindest eine Zwischenraum zwischen in einem Abstand angeordneten Energieleiteinrichtungen, beispielsweise die Maschen eines Netzes, können einen Transportweg bilden. Die Ionendosiervorrichtung kann als Ionentransportbarriere im Wesentlichen sämtlichen Transport von Ionen unterbinden. Beispielsweise kann sie einen Elektrolyten in zwei Bereiche teilen, zwischen denen dann kein Austausch von Ionen ermöglicht wird, solange die lonendosiervorrichtung bzw. die Trenneinrichtung der lonendosiervorrichtung vorhanden ist und den Austausch der Ionen blockiert. Durch das Zerstören der Ionentransportbarriere, d.h. durch das Zerstören der Trenneinrichtung kann die lonendosiervorrichtung im Maße der zumindest einen Öffnung für den Elektrolyten und somit für die in dem Elektrolyten vorhandenen Ionen durchlässig werden. Durch die zumindest eine Öffnung kann sich dann der Elektrolyt ausbreiten. Die maximale Durchlässigkeit kann bei vollständiger Zerstörung der Trenneinrichtung gegeben sein, wenn die lonendosiervorrichtung im Wesentlichen nur aus der ersten Energieleiteinrichtung und der ersten Energiezuführeinrichtung besteht. Durch das Zerstören der Ionentransportbarriere oder der Trenneinrichtung kann der Transportweg für Ionen oder für einen Elektrolyten samt gelöster Ionen freigegeben werden.

In einem anderen Beispiel kann die Trenneinrichtung selbst einen Austausch von Ionen zwischen zwei Bereichen ermöglichen, jedoch kann die Anzahl der auszutauschenden Ionen von Zustandsparametern des für die Trenneinrichtung verwendeten Materials abhängen. Die Trenneinrichtung ist dann eine Ionentransporteinrichtung, deren lonenleitfähigkeit mittels einer über die Energieleiteinrichtung eingebrachten Energie gesteuert werden kann.

Für die Trenneinrichtung kann ein Material verwendet werden, dessen Ionenleitfähigkeit von einer vorhandenen und/oder absorbierten Umgebungsenergie abhängt, beispielsweise von einer vorhandenen optischen Strahlung. Insbesondere kann die Anzahl der beweglichen Ionen in dem Material der Trenneinrichtung von der Menge der zugeführten Energie abhängen. Die Trenneinrichtung kann ein Elektrolyt sein, dessen Transportfähigkeit für Ionen von der von ihm absorbierten Energie abhängt. Die Menge der zugeführten Energie kann eine lonenflußdichte in der Trenneinrichtung festlegen. Ist in einer Energiespeichervorrichtung bereits ein Elektrolyt vorhanden, dessen lonenleitfähigkeit mit einer geeigneten Energieform beeinflussbar ist, kann es ausreichen, lediglich eine Struktur einzubringen, die aus der zu dem Elektrolyten passenden Energieleiteinrichtung besteht. Man kann dabei auch ohne zusätzliche Barriere auskommen und nur die trennenden Eigenschaften des Elektrolyten steuern.

In einem Ausführungsbeispiel der vorliegenden Erfindung ist die Trennvorrichtung als lonentransportbarriere zum Blockieren eines lonentransports ausgebildet.

Das Blockieren des lonentransports unterbindet im Wesentlichen den Ionentransportprozess und kann so dafür sorgen, dass keine oder lediglich eine sehr geringe Selbstentladung innerhalb einer Energiespeichervorrichtung stattfindet, in der die lonendosiervorrichtung mit der zugehörigen Trenneinrichtung genutzt wird.

Gemäß einem anderen Aspekt der Erfindung ist die erste Energieleiteinrichtung als ein Netz mit wenigstens einer gitterförmigen, wabenförmigen und/oder runden Öffnung ausgebildet. Das Netz weist somit zumindest eine Masche oder zumindest eine Öffnung auf, die zwischen nebeneinander liegenden Abschnitten der festen Energieleiteinrichtung entsteht und die einen Ionentransport zwischen der ersten Energieleiteinrichtung hindurch, um sie herum und/oder an ihr vorbei ermöglicht. Sind die Öffnungen frei, beispielsweise, weil ein Polymer, eine Barriereschicht oder eine Trenneinrichtung innerhalb der lonendosiervorrichtung, welches/welche diese Öffnungen verschließt, zerstört worden ist, so kann ein im Wesentlichen ungehinderter Ionentransport stattfinden. In diesem Zusammenhang kann ein im Wesentlichen ungehinderter Ionentransport bedeuten, dass die Dimensionen der Öffnungen oder Poren der Energieleiteinrichtung so gewählt ist, dass durch das aus der ersten Energieleiteinrichtung gebildete Netz oder die gebildete Struktur im Wesentlichen eine vernachlässigbare Behinderung des Ionentransports stattfindet. Der Ionentransport wird im Wesentlichen durch die Trennvorrichtung, beispielsweise durch die lonenleitfähigkeit eines mittels Energie beeinflussbaren Elektrolyten, aber auch durch die Transporteigenschaften des benachbarten Materials bestimmt. Die lonendosiervorrichtung kann als eine steuerbare lonentransporteinrichtung angesehen werden.

Gemäß einem weiteren Aspekt der vorliegenden Erfindung ist die erste Energieleiteinrichtung mit einem Barrierematerial oder einer Trenneinrichtung umgeben und bildet mit diesem die lonendosiervorrichtung. Dieses Barrierematerial kann mittels der transportierten ersten Energie zerstört werden und einen Ionentransport dosieren bzw. einen Ionentransport ermöglichen. Das Barrierematerial mit Energieleiteinrichtung bildet eine lonendosiervorrichtung oder Ionendosierschicht, die mittels zugeführter Energie beeinflusst werden kann.

Die Zerstörung des Barrierematerials, beispielsweise die Zerstörung eines photochemisch zersetzbaren Polymers oder eines Polymers, dessen chemisch-physikalische Eigenschaft mittels spezifischer Strahlung definiert eingestellt werden kann, kann durch Absorption einer Energie stattfinden, welche aus der ersten Energieleiteinrichtung freigegeben wird. Die Freigabe der Energie aus der ersten Energieleiteinrichtung an das umgebende Barrierematerial kann durch die hohen Verluste realisiert werden, welche die erste Energieleiteinrichtung aufweist. In einem weiteren Beispiel handelt es sich dabei um Transportverluste der Energie und/oder um eine definierte Auskopplung von Energie aus der Energieleiteinrichtung mittels einer dafür vorgesehenen Auskoppeleinrichtung. Eine Auskoppeleinrichtung ist beispielsweise eine Struktur innerhalb von Gradienten-Lichtleitfasern.

Gemäß noch einem anderen Aspekt der vorliegenden Erfindung ist die erste Energieleiteinrichtung ein Leiter, welcher aus der Gruppe von Leitern ausgewählt ist, welche aus einem optischen Leiter, einem thermischen Leiter, einem elektrischen Leiter und einem Leiter für eine elektromagnetische Welle besteht.

Durch die Verwendung verschiedener Energieleiteinrichtungen können verschiedene Energieformen, beispielsweise optische Energie, thermische Energie, magnetische Energie, elektrische Energie, elektrostatische Energie oder elektromagnetische Energie, genutzt werden, um eine Wirkung in der lonendosiervorrichtung und insbesondere in dem Barrierematerial zu verursachen. Die Wirkung kann die Veränderung der lonenleitfähigkeit und/oder die Zerstörung des Barrierematerials sein. Ein Beispiel für einen Leiter für optische Energie ist eine Lichtleitfaser, Beispiele für einen Leiter für thermische Energie sind ein Heitzdraht oder eine Heat-Pipe, ein Beispiel für einen Leiter für elektrische Energie ist ein Draht und Beispiele für einen Leiter für elektromagnetische Energie sind ein Koaxialleiter oder ein Hohlleiter.

Gemäß noch einem anderen Aspekt der vorliegenden Erfindung weist die erste Energieleiteinrichtung einen hohen Verlust für den Energietransport auf. Alternativ weist die Energieleiteinrichtung eine definierte Auskoppelrate für die geführte Energie auf. Eine definierte Auskoppelrate kann beispielsweise durch die Strukturierung von Gradienten-Lichtleitfasern erreicht werden. Insbesondere kann die definierte Auskoppelrate an der vorgebbaren Position eingestellt werden.

Der hohe Verlust kann beispielsweise durch eine geringe Qualität der ersten Energieleiteinrichtung entstehen. Beispielsweise kann ein optischer Leiter eingesetzt werden, welcher eine Strahlung im Wesentlichen aus dem Inneren des optischen Leiters in einen Außenraum abgibt. Durch unterschiedliche Maßnahmen kann auch die Position eingestellt werden, an der die Energieabgabe erfolgt. Beispielsweise kann bei einem optischen Leiter durch eine reflektierende Umhüllung oder eine reflektierende Ummantelung eine hohe Energieleitfähigkeit innerhalb des Leiters ermöglicht werden, während an einer Zielstelle der Verlust des optischen Leiters höher ist. Die Position der Energieabgabe kann beispeilsweise auch durch eine geeignete Strukturierung von Gradienten-Lichtleitfasern realisiert werden. Generell sind diese Gradienten-Lichtleitfasern verlustarm, allerding können die Auskoppelstellen durch eine einzubringende Strukturierung definiert werden. Hierdurch wird auch eine lokale Beeinflussung der Barriereschicht möglich.

Gemäß noch einem anderen Aspekt der vorliegenden Erfindung weist die Trenneinrichtung ein Polymer auf. Dieses Polymer kann ein photochemisch zersetzbares Polymer oder ein thermisch zersetzbares Polymer sein. Alternativ weist die Trenneinrichtung ein Material auf, dessen lonenleitfähigkeit mittels eines von der ersten Energieleiteinrichtung erzeugten elektrischen Feldes verändert werden kann, um die Anzahl der von der Trenneinrichtung transportierten und/oder durchgelassenen Ionen zu bestimmen.

Gemäß noch einem anderen Aspekt der vorliegenden Erfindung weist die Ionendosiervorrichtung zumindest eine zweite Energieleiteinrichtung mit einer zumindest zweiten Energiezufuhreinrichtung auf, wobei die zumindest eine zweite Energieleiteinrichtung von der ersten Energieleiteinrichtung getrennt angeordnet ist. Die zumindest eine zweite Energieleiteinrichtung ist eingerichtet, die Transportrichtung der zweiten Energie vorzugeben, um die zweite Energie an eine vorgebbare Position der Trenneinrichtung zu führen und an dieser Position die Wirkung der ersten Energie auf die Trenneinrichtung der lonendosiervorrichtung zu verstärken und/oder aufzuheben.

Die Beschreibung der ersten Energieleiteinrichtung kann auch für die zweite Energieleiteinrichtung gelten. Allgemein werden die erste Energieleiteinrichtung und die zweite Energieleiteinrichtung als Energieleiteinrichtung bezeichnet. Ebenso kann die Beschreibung der ersten Energiezufuhreinrichtung für die zweite Energiezufuhreinrichtung gelten. In einem Beispiel kann durch den zusätzlichen Einsatz der zweiten Energieleiteinrichtung eine verstärkende Wirkung in der Trenneinrichtung hervorgerufen werden, indem dieselbe Energieform von derselben oder von einer unterschiedlichen Energiequelle sowohl über die erste Energieleiteinrichtung als auch über die zweite Energieleiteinrichtung an die Trenneinrichtung der Ionendosiervorrichtung herangeführt wird.

Die lonendosiervorrichtung, insbesondere die Trenneinrichtung, kann einen Ionenfluss im Wesentlichen orthogonal zu einer Transportrichtung einer Energie in der ersten Energieleiteinrichtung und/oder in der zweiten Energieleiteinrichtung kontrollieren. Dadurch wird der lonenfluss um die Energieleiteinrichtung herum, an der Energieleiteinrichtung vorbei oder zwischen der Energieleiteinrichtung hindurch kontrolliert.

In einem anderen Beispiel kann die Wirkung der ersten Energie auf die Trenneinrichtung mittels der Wirkung der zweiten Energie aufgehoben werden. Beispielsweise kann eine mittels optischer Energie zerstörte Trenneinrichtung, Barriereeinrichtung oder Sperrschicht durch die Zufuhr von thermischer Energie wiederherstellbar sein. Auch könnte ein Material für die Trenneinrichtung eingesetzt werden, das in Abhängigkeit der Eigenschaften der eingebrachten Energie seine Eigenschaften in definierter Weise ändert, wodurch ein Schaltprozess hinsichtlich der lonenleitfähigkeit möglich wird. In einem Beispiel könnte ein Polymer in Abhängigkeit von der Wellenlänge der zugeführten Strahlung entweder zersetzt oder vernetzt werden. Vernetzen mag in diesem Zusammenhang bedeuten, dass die Blockierwirkung wieder hergestellt wird.

Gemäß noch einem anderen Aspekt der vorliegenden Erfindung weist die Energiespeichervorrichtung ein Aktivmaterial auf, welches an der ersten Elektrode und an der zweiten Elektrode angeordnet ist.

Als Aktivmaterial kann ein Material bezeichnet werden, in welchem die elektrochemischen Reaktionen ablaufen, die zur Bildung von Ladungsträgern, d.h. die Bildung von Elektronen und Ionen, führen. Dabei fließen die Elektronen über einen externen Leiter, während die Ionen im Elektrolyten transportiert werden. Der Elektrolyt dient also als lonenleiter. Der Elektrolyt kann sowohl als Ionentransporteinrichtung als auch als eine Trenneinrichtung dienen, die über die Energiezufuhr aus der Energieleiteinrichtung gesteuert wird, wodurch sich die Bewegung der Ionen im Inneren der Energiespeichervorrichtung beeinflussen lässt.

Gemäß einem weiteren Aspekt der vorliegenden Erfindung weist die Ionentransporteinrichtung einen Separator auf.

Wenn ein Elektrolyt als Ionentransporteinrichtung genutzt wird, befindet sich ein Separator im Wesentlichen zwischen den beiden entgegengesetzt polarisierten Elektroden und dient dazu, den direkten elektrischen Kontakt zwischen den Elektroden zu verhindern und gleichzeitig den lonenfluss zu gewährleisten. Ein Elektrolyt kann auch als Separator dienen. Alternativ kann als Separator eine Membran eingesetzt werden. Die lonenleitfähigkeit eines Separators bestimmt den Widerstand für den lonenfluss zwischen den Elektroden.

Gemäß einem Ausführungsbeispiel der vorliegenden Erfindung weist der Separator eine erste lonenleitfähigkeit auf und die Trenneinrichtung weist eine zweite Ionenleitfähigkeit auf, wobei die zweite lonenleitfähigkeit im Falle der Zerstörung der Trenneinrichtung der lonendosiervorrichtung größer als die erste Ionenleitfähigkeit ist. In diesem Falle stellen die Öffnungen, Maschen oder Poren eines Netzes aus Energieleiteinrichtungen keinen signifikanten Widerstand gegen einen Ionenstrom dar. Der Widerstand gegen den lonenstrom wird dann vom Separatormaterial bestimmt.

Gemäß noch einem anderen Aspekt der vorliegenden Erfindung ist die Energiespeichervorrichtung als Batterie, als zylindrische Zelle, als prismatische Zelle und/oder als Coffee Bag Zelle ausgeführt.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte mit Bezug auf Verfahrensansprüche beschrieben wurden. Ein Fachmann kann jedoch der vorangehenden Beschreibung und der folgenden Beschreibung entnehmen, dass, außer es ist anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen beziehen. Insbesondere sollen Kombinationen zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf Figuren beschrieben.
Fig. 1 zeigt eine perspektivische Darstellung einer lonendosiervorrichtung ohne Trenneinrichtung gemäß einem exemplarischen Ausführungsbeispiel der vorliegenden Erfindung.
Fig. 2 zeigt eine Längsschnittdarstellung einer lonendosiervorrichtung gemäß einem exemplarischen Ausführungsbeispiel der vorliegenden Erfindung.
Fig. 3 zeigt einen Querschnittausschnitt durch eine lonendosiervorrichtung gemäß einem exemplarischen Ausführungsbeispiel der vorliegenden Erfindung.
Fig. 4 zeigt eine Energiespeichervorrichtung gemäß einem exemplarischen Ausführungsbeispiel der vorliegenden Erfindung.
Fig. 5 zeigt eine Energiespeichervorrichtung mit einem anderen Schichtaufbau gegenüber Fig. 4 gemäß einem exemplarischen Ausführungsbeispiel der vorliegenden Erfindung.

### Detaillierte Beschreibung von Ausführungsbeispielen

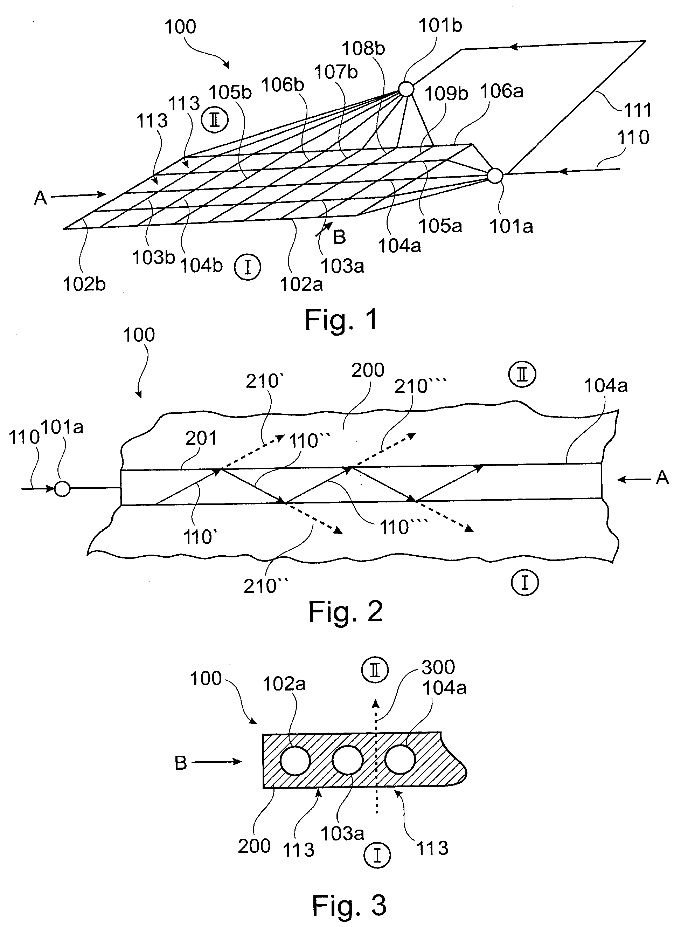

Die Darstellungen in den Figuren sind schematisch und nicht maßstäblich. In der folgenden Beschreibung der Fig. 1 bis 5 werden die gleichen Bezugszeichen für gleiche oder sich entsprechende Elemente verwendet.

Fig. 1 zeigt eine perspektivische Darstellung einer lonendosiervorrichtung ohne Trenneinrichtung gemäß einem exemplarischen Ausführungsbeispiel der vorliegenden Erfindung. Insbesondere zeigt Fig. 1 eine Vielzahl von Energieleiteinrichtungen. Die Energieleiteinrichtung 102a, 103a, 104a, 105a, 106a, 102b, 103b, 104b, 105b, 106b, 107b, 108b, 109b der lonendosiervorrichtung 100 ist als ein Netz aus zumindest einer ersten Energieleiteinrichtung 102a, 103a, 104a, 105a, 106a und zumindest einer zweiten Energieleiteinrichtung 102b, 103b, 104b, 105b, 106b, 107b, 108b, 109b dargestellt. Die lonendosiervorrichtung 100 kann aber auch nur eine einzige erste Energieleiteinrichtung 104a aufweisen, die mit einer in Fig. 1 nicht dargestellten Trenneinrichtung ummantelt ist.

Ohne Einschränkung der Allgemeinheit wird bei der Beschreibung der folgenden Figuren von Lichtleitern, optischen Leitern oder Fasern als erste Energieleiteinrichtung 102a, 103a, 104a, 105a, 106a bzw. als zweite Energieleiteinrichtung 102b, 103b, 104b, 105b, 106b, 107b, 108b, 109b ausgegangen, die ein Netz aus Energieleiteinrichtungen für die lonendosiervorrichtung 100 bilden. Die erste Energieleiteinrichtung 102a, 103a, 104a, 105a, 106a und die zweite Energieleiteinrichtung 102b, 103b, 104b, 105b, 106b, 107b, 108b, 109b sind voneinander separiert und rechtwinklig zueinander angeordnet. Dadurch entstehen die rechteckförmigen Öffnungen 113, die rechteckförmigen Maschen 113 oder die Gitteröffnungen 113 in den Energieleiteinrichtungen bzw. in der lonendosiervorrichtung 100. Die erste Energieleiteinrichtung 102a, 103a, 104a, 105a, 106a und die zweite Energieleiteinrichtung 102b, 103b, 104b, 105b, 106b, 107b, 108b, 109b werden von derselben Energiequelle versorgt. In dem in Fig. 1 beschriebenen optischen Fall ist die Energiequelle die Laserstrahlung 110, welche eine optische Energie transportiert. In einem weiteren Beispiel können unterschiedliche Energieleiteinrichtungen auch aus unterschiedlichen Energiequellen gespeist werden. Dies kann z.B. der Fall sein, wenn durch Energiequellen unterschiedliche Eigenschaften in der Trenneinrichtung eingestellt werden sollen.

Die erste Energie 110 wird über die erste Energiezufuhreinrichtung 101a und über die zweite Energiezufuhreinrichtung 101b in die erste Energieleiteinrichtung 102a, 103a, 104a, 105a, 106a bzw. in die zweite Energieleiteinrichtung 102b, 103b, 104b, 105b, 106b, 107b, 108b, 109b eingekoppelt. In Fig. 1 ist die erste Energiezufuhreinrichtung 101a und die zweite Energiezufuhreinrichtung 101b als Strahlteiler 101a, 101b ausgebildet, der jede einzelne der Vielzahl von ersten Energieleiteinrichtungen 102a, 103a, 104a, 105a, 106a und der Vielzahl von zweiten Energieleiteinrichtungen 102b, 103b, 104b, 105b, 106b, 107b, 108b, 109b der Ionendosiervorrichtung 100 mit Energie versorgt. Die erste Energiezufuhreinrichtung 101a koppelt über die Stichleitung 111 auch noch die Energie für die zweite Energieleiteinrichtung 102b, 103b, 104b, 105b, 106b, 107b, 108b, 109b aus der ersten Energiezufuhreinrichtung 101a aus. Alternativ kann das in Fig. 1 dargestellte Netz einer lonendosiervorrichtung 100 auch mittels einer einzigen ersten Energieleiteinrichtung 102a gebildet werden, die schleifenförmig verlegt wird. Beim Verlegen sind bei der Verwendung von Lichtfasern die begrenzten Biegeradien der Lichtfasern zu beachten.

Alternativ zu der Versorgung mit der gleichen Energie 110, also mit der Laserstrahlung 110, können für die erste Energieleiteinrichtung 102a, 103a, 104a, 105a, 106a und für die zweite Energieleiteinrichtung 102b, 103b, 104b, 105b, 106b, 107b, 108b, 109b unterschiedliche Energieformen, beispielsweise optische Energie und thermische Energie, genutzt werden, wenn für die erste Energieleiteinrichtung 102a, 103a, 104a, 105a, 106a und die zweite Energieleiteinrichtung 102b, 103b, 104b, 105b, 106b, 107b, 108b, 109b entsprechende physikalische Energieleiteinrichtungen vorgesehen sind, also beispielsweise optische Leiter und thermische Leiter.

Zur besseren Sichtbarkeit der Energieleiteinrichtungen 102a, 103a, 104a, 105a, 106a, 102b, 103b, 104b, 105b, 106b, 107b, 108b, 109b der Ionendosiervorrichtung 100 ist in Fig. 1 die Trenneinrichtung nicht dargestellt, welche sich in den Öffnungen 113 der Energieleiteinrichtungen der lonendosiervorrichtung 100 und/oder um die Vielzahl der ersten Energieleiteinrichtungen 102a, 103a, 104a, 105a, 106a und um die Vielzahl der zweiten Energieleiteinrichtungen 102b, 103b, 104b, 105b, 106b, 107b, 108b, 109b herum befindet. In dieser Form von einzelnen Energieleiteinrichtungen mag die lonendosiervorrichtung 100 bei zerstörter Trenneinrichtung vorliegen. Die Trenneinrichtung oder Barriereschicht in den Öffnungen 113 kann als Polymer ausgebildet sein, welches die Öffnungen 113 verschließt und somit zusammen mit der ersten Energieleiteinrichtung 102a, 103a, 104a, 105a, 106a und/oder mit der zweiten Energieleiteinrichtung 102b, 103b, 104b, 105b, 106b, 107b, 108b, 109b eine lonendosiervorrichtung 100 oder Ionendosierschicht 100 bildet.

Die erste Energieleiteinrichtung 102a, 103a, 104a, 105a, 106a und/oder die zweite Energieleiteinrichtung 102b, 103b, 104b, 105b, 106b, 107b, 108b, 109b sind somit beispielsweise in ein photochemisch zersetzbares Polymer eingebettet. Durch die Versorgung mit der Laserstrahlung 110, welche durch die erste Energieleiteinrichtung 102a, 103a, 104a, 105a, 106a und/oder die zweite Energieleiteinrichtung 102b, 103b, 104b, 105b, 106b, 107b, 108b, 109b zu den jeweiligen Öffnungen 113 und somit auch zu den darin befindlichen Trenneinrichtungen und insbesondere zu dem Material der Barriereschicht geführt wird. Da die Trenneinrichtung aus photochemisch zersetzbarem Polymer hergestellt ist, kann durch das Heranführen der Laserstrahlung an die Trenneinrichtung das photochemisch zersetzbare Polymer zerstört werden.

Die Kombination aus erster Energieleiteinrichtung 102a, 103a, 104a, 105a, 106a und zweiter Energieleiteinrichtung 102b, 103b, 104b, 105b, 106b, 107b, 108b, 109b mit der Trenneinrichtung kann auch als schaltbarer Separator 100 bezeichnet werden und für eine Batterie genutzt werden. Der schaltbare Separator 100 kann einen lonenfluss um die Energieleiteinrichtung herum dosieren, begrenzen, verändern oder sogar im Wesentlichen vollständig blockieren.

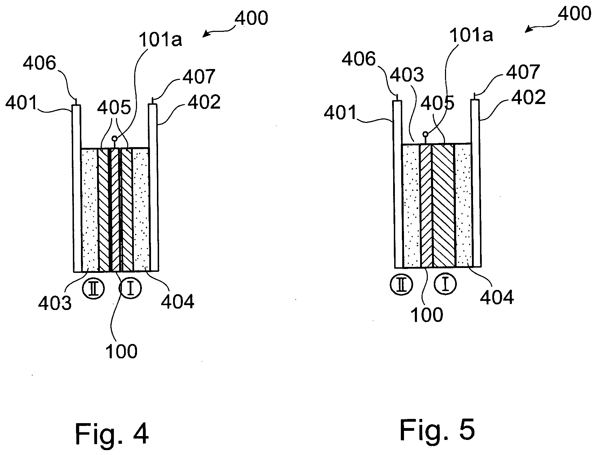

Bei dem schaltbaren Separator 100 oder der lonendosiervorrichtung 100 handelt es sich um eine Vorrichtung, mit deren Hilfe die Lagerfähigkeit von Batterien erhöht werden kann. Beispiele für Anordnungen der Ionendosiervorrichtung 100 in einer Batterie 400 sind in Fig. 4 und Fig. 5 dargestellt. Der Separator 100 und insbesondere die Trenneinrichtung der lonendosiervorrichtung 100 kann die Selbstentladung in einer Batterie 400 reduzieren. Die Selbstentladung wird häufig durch unerwünschte Nebenreaktionen innerhalb der Batterie 400 oder Zelle 400 bewirkt, bei denen es zu einem Ionentransport durch den in der Batterie 400 vorhandenen Elektrolyten 405 kommt. Der Elektrolyt ist in der Batterie 400 als Ionenstransporteinrichtung 405 vorgesehen. Zur Reduktion der Selbstentladung verhindert die Ionendosiervorrichtung 100 einen Ionentransport, der durch unerwünschte Nebenreaktionen innerhalb der Batterie 400 stattfinden würde, indem ein solcher Ionentransport in dem Elektrolyten 405 während der Dauer der Lagerung der Batterie unterbunden wird. Dies entspräche einer Ausführung der lonendosiervorrichtung 100 oder der Energiespeichervorrichtung 400 als lonenschalter oder ,An'-Schalter, bei dem, bei dem Bereitstellen einer vorgebbaren Energiemenge, eine vorgebbare Anzahl von Ionen transportiert wird. Eine weitere Ausführungsform der Erfindung als lonendosiervorrichtung ermöglicht eine Dosierung des lonenstrom innerhalb der Zelle, der dann durch Erhöhen oder Erniedrigen der Energiezufuhr erhöht oder erniedrigt werden kann. Insbesondere in Fehlerfällen kann so eine Stromregelung im Hinblick auf eine erhöhte Sicherheit möglich gemacht werden. Die Ionendosiervorrichtung 100 kann den Ionentransportprozess innerhalb der Batterie 400 durch den Elektrolyten im Wesentlichen für die Dauer der Batterielagerung unterbinden. Zum Zeitpunkt der Inbetriebnahme, Aktivierung und Nutzung der Energiespeichervorrichtung 400 oder der Batterie 400 wird die Ionentransportbarriere oder Trenneinrichtung so eingestellt, dass ein Ionentransport durch die lonendosiervorrichtung 100 und insbesondere durch deren Trenneinrichtung hindurch einer vorgebbaren Größe entspricht oder im Wesentlichen von der Trenneinrichtung nicht behindert wird. In einem Ausführungsbeispiel wird die Barrierewirkung der Trenneinrichtung zerstört, so dass im Wesentlichen durch die Öffnungen 113 hindurch oder durch Zwischenräume 113 zwischen den Abschnitten der ersten Energieleiteinrichtung hindurch ein Ionentransport stattfinden kann, der von der Ionendosiervorrichtung 100 nicht gestört wird. In anderen Worten wird durch das Aufheben der Trennwirkung der Trenneinrichtung ein Betrieb einer Batterie ermöglicht, so als ob die lonendosiervorrichtung 100 nicht in der Batterie vorhanden wäre. Bei der Nutzung der Batterie zur Energiefreigabe ist die Wirkung der Ionendosiervorrichtung 100 im Wesentlichen aufgehoben oder so wie gewünscht eingestellt.

Fig. 2 zeigt eine Schnittdarstellung durch eine lonendosiervorrichtung 100 gemäß einem exemplarischen Ausführungsbeispiel der vorliegenden Erfindung. Die Fig. 2 zeigt dabei den Schnitt durch die erste Energieleiteinrichtung 104a der Fig. 1, welche von der Trenneinrichtung 200 umgeben ist. Bei der lonentrenneinrichtung 200 handelt es sich um ein photochemisch zersetzbares Polymer, sofern es sich um die Zuführung von Strahlung als Energieform handelt. Die erste Energieleiteinrichtung 104a bzw. die Lichtleitfaser 104a ist vollständig von der Trenneinrichtung 200, insbesondere von dem Barriereschichtmaterial 200, umgeben. Die Trenneinrichtung 200 blockiert im vorliegenden Fall der Fig. 2 im Wesentlichen vollständig einen Ionentransport zwischen den Bereichen I und II, um die erste Energieleiteinrichtung 104a herum, an ihr vorbei und/oder durch die Zwischenräume 113 zwischen Abschnitten der Energieleiteinrichtungen hindurch. Die Schnittdarstellung der Fig. 2 entspricht einem Schnitt entlang der Schnittmarkierung A der Fig. 1.

Von der Seite der ersten Energiezufuhreinrichtung 101a aus wird die erste Energie 110 in die erste Energieleiteinrichtung 104a eingekoppelt. In dem in Fig. 2 dargestellten Ausführungsbeispiel ist die erste Energie eine Laserstrahlung 110 und somit eine optische Energie 110. Die optische Energie 110 wird entlang der ersten Energieleiteinrichtung 104a im Inneren der Energieleiteinrichtung 104a durch Reflexionen an der Grenzschicht 201 geführt, so dass sich die Laserstrahlung 110 im Inneren der Energieleiteinrichtung 104 als Strahlen 110', 110", 110"' ausbreitet. In Fig. 2 ist ebenfalls dargestellt, dass aufgrund hoher Verlustanteile der Laserstrahlung die Verlustenergie in der Form von Strahlung 210', 210", 210'" aus der ersten Energieleiteinrichtung 104a in die Trenneinrichtung 200 oder Barriereschicht 200 ausgekoppelt wird. Zum gezielten Auskoppeln kann in einem Lichtleiter eine Struktur eingebracht sein, beispielsweise eine Struktur in einer Gradientenfaser, wie Mikroprismen oder Mikrokonkaven mit variabler Periode. Durch die Einbringung von Strukturen kann sich der Einfallswinkel der Strahlung soweit verringern, dass er kleiner als der Grenzwinkel für die Totalreflexion wird. Durch diese konstruktive Maßnahme kann eine Auskopplung von Strahlung erreicht werden. Durch diese Auskopplung kann die ausgekoppelte Energie 210', 210", 210"' mit der Trenneinrichtung 200 bzw. dem photochemisch zersetzbaren Polymer 200 wechselwirken, wodurch die Trenneinrichtung 200 zerstört wird oder eine Ionenleitfähigkeit der Trenneinrichtung 200 beeinflusst wird. Im Falle der Ausbreitung einer elektromagnetischen Energie kann der hohe austretende Energieanteil durch eine physikalische Anpassung eines Hohlleiters oder eines Wellenwiderstandes in der Mantelfläche des Hohlleiters erzielt werden.

Die Trenneinrichtung 200 bildet zusammen mit der ersten Energieleiteinrichtung 102a, 103a, 104a, 105a, 106a eine dünne Schicht oder ein Schichtensystem, welche/welches zusätzlich zu einem in einer Batterie 400 vorhandenen Elektrolyt 405 zwischen beide Elektroden einer Batterie eingebracht werden kann. Der Elektrolyt 405 kann auch einen zusätzlichen Separator aufweisen und bildet dann ein Elektrolyt/Separatorsystem 405. Dieser in dem Elektrolyt/Separatorsystem vorhandene Separator ist im Wesentlichen für die Größe des Flusses der Ionen verantwortlich, wenn die Barrierewirkung der Trenneinrichtung 200 aufgehoben ist. Beispielsweise kann der Separator des Elektrolyt/Separatorsystems eine geringe Ionenleitfähigkeit verglichen mit der lonenleitfähigkeit der Trennvorrichtung 200 aufweisen. Die Trennschicht 200 verhält sich inert gegenüber den in der Batterie 400 verwendeten Materialien, d. h. sie führt nicht zu Nebenreaktionen und zur Bildung von Reaktionsprodukten, welche die Funktionalität der Batterie einschränken könnten.

Die Trenneinrichtung 200 weist die Eigenschaft auf, dass sie ihre lonenleitfähigkeit durch einen Initialprozess so ändert, dass innerhalb kurzer Zeit die Funktionalität der Batterie hergestellt werden kann. Dabei wird durch den Initialprozess die von der Trenneinrichtung 200 verursachte Unterbrechung der lonentransportwege zerstört, so dass innerhalb kurzer Zeit die Funktionalität der Batterie hergestellt werden kann. Der Initialprozess oder die Aktivierung der Batterie 400 bewirkt, dass sich die Batterie 400 so verhält, als wäre die lonendosiervorrichtung 100 nicht vorhanden. Durch einen entsprechenden oder aber auch durch einen anderen Initialprozess kann die Barrierewirkung der Trenneinrichtung 200 wieder hergestellt werden.

Die Fig. 3 zeigt einen Querschnittausschnitt der lonendosiervorrichtung 100 gemäß einem exemplarischen Ausführungsbeispiel der vorliegenden Erfindung. Es ist ein Ausschnitt des Querschnitts durch die lonendosiervorrichtung 100 entlang der Schnittmarkierung B der Fig. 1 dargestellt. Somit ist die Energiezufuhreinrichtung 110 in Fig. 3 nicht dargestellt. Die Fig. 3 zeigt wie die erste Energieleiteinrichtung 102a, 103a, 104a von der Trenneinrichtung 200, beispielsweise dem Polymer 200, umgeben ist und die lonendosiervorrichtung 100 bildet. Die Zwischenräume 113 zwischen den ersten Energieleiteinrichtungen 102a, 103a, 104a werden dabei von der Trennvorichtung 200 verschlossen, so dass im Wesentlichen kein Ionentransport zwischen dem Bereich I und dem Bereich II entlang des symbolisch dargestellten Pfeils 300 oder auch in Gegenrichtung möglich ist. Auch ein Transport an der Energieleiteinrichtung 102a, 103a, 104a, 105a, 106a, 102b, 103b, 104b, 105b, 106b, 107b, 108b, 109b vorbei oder durch die Zwischenräume 113 hindurch ist blockiert. Somit blockiert die Trenneinrichtung 200 einen Ionentransport zwischen dem Bereich I und II und die lonendosiervorrichtung 100. Die Trenneinrichtung 200 bildet eine Ionentransportbarriere. Folglich kann mit der lonendosiervorrichtung 100 eine dünne Schicht 100 ausgebildet werden, deren Barrierewirkung steuerbar ist. Die lonendosiervorrichtung 100 weist eine photochemisch zersetzbare Polymerschicht 200 als Trenneinrichtung 200 oder Barriereschicht 200 auf. Dieses Polymer 200 wird durch Einbringung von Energie, z.B. monochromatischer Strahlung, beispielsweise durch einen Laser, innerhalb kürzester Zeit zersetzt oder so geschädigt, dass die zuvor verschlossenen Ionentransportwege 113 zwischen den ersten Energieleiteinrichtungen 102a, 103a, 104a freigegeben werden. Nach der Freigabe der Transportwege 113 oder der Öffnung 113 kann ein Ionentransport zwischen dem Bereich I und dem Bereich II stattfinden. Somit wird eine Entladung der Batterie über einen externen Stromkreis möglich und die Batterie 400 kann genutzt werden. In diesem Zustand ist die Batterie 400 aktiviert. Die bei der Zersetzung entstehenden, innerhalb der Zelle verbleibenden Reaktionsprodukte der photochemischen Zersetzung sollen das Batterieverhalten nicht negativ beeinflussen.

Zur Einbringung und Verteilung der Energie 110 bzw. der Strahlung 110 innerhalb der Barriereschicht 200 wird ein Netz von Lichtleitfasern 102a, 103a, 104a, 105a, 106a, 102b, 103b, 104b, 105b, 106b, 107b, 108b, 109b in die Schicht 100 eingebracht. Die verwendeten Fasern 102a, 103a, 104a, 105a, 106a, 102b, 103b, 104b, 105b, 106b, 107b, 108b, 109b weisen hohe Verluste bezüglich des Strahlungstransports auf, d. h. ein merklicher Teil der Strahlung 110', 110", 110"' wird während der Reflexionsprozesse an den Faserwänden 201 durch die Faserwände 201 hindurch in das Polymer 200 ausgekoppelt, oder aber, die Lichtleitfaser ermöglichen, z.B. durch eine eingebrachte Struktur die definierte Auskopplung eines teils der Strahlung. Die ausgekoppelte Energie wechselwirkt mit dem Polymer 200 und initiiert in dem Polymer 200 die gewünschte photochemische Reaktion, beispielsweise die Zersetzung des Polymers 200 bzw. der umgebenden Trenneinrichtung 200. Durch Einbringung der Strahlung 210', 210", 210"' in die Trenneinrichtung 200 wird der Separator bzw. die Batterie 400 freigeschaltet, so dass der Ionentransport ermöglicht wird und die Batterie im Wesentlichen uneingeschränkt funktioniert. Die Wirkung der Trenneinrichtung 100 in der Batterie 400 ist somit im Wesentlichen aufgehoben. Das Zerstören und Wiederherstellen der Trenneinrichtung ermöglicht das Realisieren eines Ionenschalters. Der Ionenschalter wird angeschaltet, wenn die Trenneinrichtung 200 zerstört ist und wird ausgeschaltet, wenn die Trenneinrichtung 200 wieder hergestellt ist.

Alternativ kann in einer weiteren Ausführungsform die lonendosiervorrichtung 100, also das System Polymer-Lichtleitfaser 100, so gewählt werden, dass sich in Abhängigkeit von der verwendeten Wellenlänge der Strahlung 110 die Eigenschaften des Einbettungsmaterials, d.h. das Material der Barriereschicht 200, so ändern, dass die Barriereschicht 200, also im Wesentlichen das Umgebungsmaterial 200, für den Ionentransportprozess geöffnet wird. Bei Verwendung einer anderen Wellenlänge oder bei Abschalten der Strahlung kann die Barriereschicht 100 wieder hergestellt werden, so dass die Öffnungen 113 durch die Rückbildung des Einbettungsmaterials 200 wieder geschlossen werden. Durch die Verwendung eines derart über die Wellenlänge beeinflussbaren Materials 200 kann die Batteriefunktion zugeschaltet oder abgeschaltet oder auch dosiert werden.

Neben der optischen Aktivierung der Batterie 400 mittels Lichtleitfasern 102a, 103a, 104a, 105a, 106a, 102b, 103b, 104b, 105b, 106b, 107b, 108b, 109b ist auch eine thermische oder auch elektrische Zerstörung bzw. Wiederherstellung der Sperrschicht 100 und insbesondere der Trenneinrichtung 200 denkbar. In einer anderen Ausführungsform ist es auch vorgesehen, dass die erste Energieleiteinrichtung 102a, 103a, 104a, 105a, 106a eine optische Energieleiteinrichtung zum Transport einer optischen Energie ist und die zweite Energieleiteinrichtung 102b, 103b, 104b, 105b, 106b, 107b, 108b, 109b für einen thermischen Energietransport ausgelegt ist, beispielsweise mittels Heizdrähten 102b, 103b, 104b, 105b, 106b, 107b, 108b, 109b. So könnte beispielsweise eine Barriereschicht 200 und insbesondere die Trenneinrichtung 200 durch Zuführung von optischer Energie über die erste Energieleiteinrichtung 102a, 103a, 104a, 105a, 106a geöffnet oder zerstört werden und dann später durch Zufuhr der zweiten Energie über die zweite Energieleiteinrichtung 102b, 103b, 104b, 105b, 106b, 107b, 108b, 109b oder über ein zusätzliches eingelassenes Netz mittels thermischer Beeinflussung des Materials 200 bzw. der Trenneinrichtung 200 wieder verschlossen und somit die Barrierewirkung wieder hergestellt werden.

Die Fig. 4 zeigt eine erste Energiespeichervorrichtung gemäß einem exemplarischen Ausführungsbeispiel der vorliegenden Erfindung. Die Energiespeichervorrichtung 400, die Batterie 400 oder der Akkumulator 400 weist eine erste Elektrode 401 oder Anode 401 und eine zweite Elektrode 402 oder Kathode 402 auf. An der Anode 401 ist ein erstes Aktivmaterial 403 angeordnet und an der zweiten Elektrode ist ein zweites Aktivmaterial 404 angeordnet. Die Aktivmaterialien 403, 404 dienen dem Freisetzen von Ionen und dem Erzeugen von elektrischen Ladungen während der im Aktivmaterial ablaufenden elektrochemischen Reaktionen. Die elektrischen Ladungen können über die Elektrodenanschlüsse 406, 407 oder Stromableiter 406, 407 abgeführt werden. Die Energiespeichervorrichtung 400 weist drei Anschlüsse auf, nämlich die Elektrodenanschlüsse 407, 407 zum Abführen der in der Energiespeichervorrichtung 400 gespeicherten Energie und den Aktivierungsanschluss 101a oder die Energiezuführeinrichtung 101a zum Aktivieren der Energiespeichervorrichtung 400. Erst nach dem Aktivieren kann an den Elektrodenanschlüssen 406, 407 die gespeicherte Energie abgeführt werden. Beim Aktivieren wird die Batterie mittels der lonendosiervorrichtung 100 zugeschaltet oder angeschaltet. Mittels einer in Fig. 4 nicht dargestellten elektrischen Verbindung zwischen Anode 401 und Kathode 402 kann ein elektrischer Stromkreis in einem Außenbereich der Batterie 400 hergestellt werden, der von der Batterie 400 gespeist wird. Für den Ionentransport innerhalb der Batterie 400 sorgt der Elektrolyt 405. Der Elektrolyt 405 kann auch einen Separator aufweisen, der für die Größe des Ionenflusses mitverantwortlich ist, und mit dem Elektrolyten ein Elektrolyt/Separatorsystem 405 bildet. In dem in Fig. 4 dargestellten Fall ist jedoch in den Elektrolyten 405 die Trenneinrichtung 200 eingebracht, welche die beiden Bereiche I und II innerhalb der Batterie durch die vorhandene Trenneinrichtung 200 voneinander trennt und einen Ionenfluss verhindert. Somit zeigt Fig. 4 eine Batterie in einem lagerfähigen Zustand, der eine Langzeitlagerung ermöglicht. Dabei verhindert die Trenneinrichtung 200 oder Barriereeinrichtung 200 als Teil der lonendosiervorrichtung 100 den Austausch von Ionen.

Fig. 5 zeigt einen alternativen Schichtaufbau einer Batterie 400, bei dem die Ionendosiervorrichtung 100 mit der Trenneinrichtung 200 zwischen dem Elektrolyten 405 und dem ersten Aktivmaterial 403 angeordnet ist. Auch bei dieser alternativen Positionierung der Barriereschicht 100 unterbindet die Barriereschicht 100 im Wesentlichen vollständig einen Ionentransport zwischen den beiden Bereichen I und II. Alternativ kann die in der Barriereschicht 100 vorhandene Ionendosiervorrichtung 100 so eingerichtet sein, dass der Ionentransport nicht vollständig unterbunden wird, sondern lediglich durch die Menge einer zur Verfügung gestellten Energie gesteuert wird.

Ergänzend ist darauf hinzuweisen, dass "umfassend" und "aufweisend" keine anderen Elemente oder Schritte ausschließt und "eine" oder "ein" keine Vielzahl ausschließt. Ferner ist darauf hinzuweisen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ionendosiervorrichtung (100) für eine Batterie (400), aufweisend:
eine erste Energieleiteinrichtung (102a, 103a, 104a, 105a, 106a) mit einer ersten Energiezufuhreinrichtung (101a);
eine Trenneinrichtung (200);
wobei über die erste Energiezufuhreinrichtung (101a) der ersten Energieleiteinrichtung (102a, 103a, 104a, 105a, 106a) eine erste Energie (110) zuführbar ist;
wobei die Trenneinrichtung (200) die erste Energieleiteinrichtung ummantelt und eingerichtet ist, in einem ersten Zustand, in dem keine Energie über die erste Energiezufuhreinrichtung (101a) zugeführt wird, Ionen zu blockieren, die an der ersten Energieleiteinrichtung (102a, 103a, 104a, 105a, 106a) vorbei transportiert würden ;
wobei die erste Energieleiteinrichtung (102a, 103a, 104a, 105a, 106a) eingerichtet ist, die Transportrichtung der ersten Energie (110, 110', 110", 110"') vorzugeben, um die erste Energie (110) an eine vorgebbare Position der Trenneinrichtung (200) zu führen und an dieser Position die erste Energie (110, 210', 210", 210"') an die Trenneinrichtung (200) abzugeben;
wobei in einem zweiten Zustand, in dem die erste Energie über die erste Energiezufuhreinrichtung (101a) zugeführt wird, die Menge der abgegebenen ersten Energie (110, 210', 201", 210"') die Anzahl der von der Trenneinrichtung (200) an der ersten Energieleiteinrichtung (102a, 103a, 104a, 105a, 106a) vorbei transportierten Ionen bestimmt und/oder die Anzahl der von der Trenneinrichtung (200) durchgelassenen Ionen bestimmt.

2. lonendosiervorrichtung (100) nach Anspruch 1, wobei die Anzahl der transportierten Ionen über die Apertur wenigstens einer Öffnung (113) für einen Transportweg in der ersten Energieleiteinrichtung (102a, 103a, 104a, 105a, 106a) und/oder über die Veränderung einer lonenleitfähigkeit der Trenneinrichtung (200) beeinflussbar ist.

3. lonendosiervorrichtung (100) nach Anspruch 1 oder 2, wobei die erste Energieleiteinrichtung (102a, 103a, 104a, 105a, 106a) als ein Netz mit wenigstens einer gitterförmigen, wabenförmigen und/oder runden Öffnung (113) ausgebildet ist.

4. lonendosiervorrichtung (100) nach einem der Ansprüche 1 bis 3, wobei die erste Energieleiteinrichtung (102a, 103a, 104a, 105a, 106a) mit der Trenneinrichtung (200) umgeben ist, welche mittels der transportierten ersten Energie (110) zerstört werden kann.

5. lonendosiervorrichtung (100) nach einem der Ansprüche 1 bis 4, wobei die erste Energieleiteinrichtung (102a, 103a, 104a, 105a, 106a) ein optischer Leiter, ein thermischer Leiter, ein elektrischer Leiter und/oder ein Leiter für eine elektromagnetische Welle ist.

6. lonendosiervorrichtung (100) nach einem der Ansprüche 1 bis 5, wobei die erste Energieleiteinrichtung (102a, 103a, 104a, 105a, 106a) einen hohen Verlust für den Energietransport aufweist und/oder eine definierte Auskoppelrate der geführten Energie aufweist.

7. lonendosiervorrichtung (100) nach einem der Ansprüche 1 bis 6, wobei die Trenneinrichtung (200) ein Polymer aufweist und/oder wobei die Trenneinrichtung ein Material aufweist, dessen lonenleitfähigkeit mittels eines von der ersten Energieleiteinrichtung (102a, 103a, 104a, 105a, 106a) erzeugten elektrischen Feldes verändert werden kann, um die Anzahl der von der Trenneinrichtung (200) transportierten und/oder durchgelassenen Ionen zu bestimmen.

8. Ionendosiervorrichtung (100) nach einem der Ansprüche 1 bis 7, weiter aufweisend:
eine zweite Energieleiteinrichtung (102b, 103b, 104b, 105b, 106b, 107b, 108b, 109b) mit einer zweiten Energiezufuhreinrichtung (101b);
wobei die zweite Energieleiteinrichtung (102b, 103b, 104b, 105b, 106b, 107b, 108b, 109b) von der ersten Energieleiteinrichtung (102a, 103a, 104a, 105a, 106a) getrennt angeordnet ist; und
wobei die zweite Energieleiteinrichtung (102b, 103b, 104b, 105b, 106b, 107b, 108b, 109b) eingerichtet ist, die Transportrichtung der zweiten Energie vorzugeben, um die zweite Energie an eine vorgebbare Position der Trenneinrichtung (200) zu führen und an dieser Position die Wirkung der ersten Energie (110) auf die Trenneinrichtung (200) zu verstärken und/oder aufzuheben.

9. Verfahren zum Herstellen einer lonendosiervorrichtung (100) für eine Batterie (400), aufweisend:
Bereitstellen einer ersten Energieleiteinrichtung (102a, 103a, 104a, 105a, 106a) und einer ersten Energiezufuhreinrichtung (101a);
wobei über die erste Energiezufuhreinrichtung (101a) der ersten Energieleiteinrichtung (102a, 103a, 104a, 105a, 106a) eine erste Energie (110) zuführbar ist;
Ummanteln der ersten Energieleiteinrichtung (102a, 103a, 104a, 105a, 106a) mit einer Trenneinrichtung (200);
sodass die Trenneinrichtung (200) eingerichtet ist, in einem ersten Zustand, in dem keine Energie über die erste Energiezufuhreinrichtung (101a) zugeführt wird, Ionen, die an der ersten Energieleiteinrichtung (102a, 103a, 104a, 105a, 106a) vorbei transportiert würden, zu blockieren;
wobei die erste Energieleiteinrichtung (102a, 103a, 104a, 105a, 106a) eingerichtet ist, die Transportrichtung der ersten Energie (110, 110', 110", 110"') vorzugeben, um die erste Energie an eine vorgebbare Position der Trenneinrichtung (200) zu führen und an dieser Position die erste Energie an die Trenneinrichtung (200) abzugeben; und
so dass in einem zweiten Zustand, in dem die erste Energie über die erste Energiezufuhreinrichtung (101a) zugeführt wird, die Menge der abgegebenen ersten Energie (110, 210', 210", 210"') die Anzahl der von der Trenneinrichtung (200) an der ersten Energieleiteinrichtung (102a, 103a, 104a, 105a, 106a) vorbei transportierten Ionen bestimmt und/oder die Anzahl der von der Trenneinrichtung (200) durchgelassenen Ionen bestimmt.

10. Energiespeichervorrichtung (400), aufweisend:
eine erste Elektrode (401);
eine zweite Elektrode (402);
eine lonentransporteinrichtung (405);
die Ionendosiervorrichtung (100) nach einem der Ansprüche 1 bis 8;
wobei die Ionendosiervorrichtung (100) mit der Ionentransporteinrichtung (405) in Kontakt steht, um eine von der Ionentransporteinrichtung (405) transportierte und/oder blockierte Anzahl an Ionen zu kontrollieren;
wobei die Ionendosiervorrichtung (100) zwischen der ersten Elektrode (401) und der zweiten Elektrode (402) angeordnet ist.

11. Energiespeichervorrichtung (400) nach Anspruch 10, weiter aufweisend ein Aktivmaterial (403, 404), welches an der ersten Elektrode und der zweiten Elektrode angeordnet ist.

12. Energiespeichervorrichtung (400) nach Anspruch 10 oder 11, wobei die lonentransporteinrichtung (405) einen Separator aufweist.

13. Energiespeichervorrichtung (400) nach Anspruch 12, wobei der Separator eine erste lonenleitfähigkeit aufweist und wobei die Ionendosiervorrichtung (100) eine zweite lonenleitfähigkeit aufweist;
wobei die zweite lonenleitfähigkeit größer als die erste lonenleitfähigkeit ist.

14. Energiespeichervorrichtung (400) nach einem der Ansprüche 11 bis 14, wobei die Energiespeichervorrichtung als Batterie, als zylindrische Zelle, als prismatische Zelle und/oder als Coffee Bag Zelle ausgeführt ist.

15. Flugkörper mit einer Energiespeichervorrichtung (400) nach einem der Ansprüche 10 bis 14.

## Claims

1. An ion dosage apparatus (100) for a battery (400), comprising:
a first energy guiding device (102a, 103a, 104a, 105a, 106a) having a first energy supply device (101a);
a separation device (200),
wherein a first energy (110) is suppliable to the first energy guiding device (102a, 103a, 104a, 105a, 106a) via the first energy supply device (101a);
wherein the separation device (200) envelopes the first energy guiding device and is adapted in a first state in which no energy is supplied via the first energy supply device (101a) to block ions from being transported around the first energy guiding device (102a, 103a, 104a, 105a, 106a);
wherein the first energy guiding device (102a, 103a, 104a, 105a, 106a) is adapted to specify the transport direction of the first energy (110, 110', 110", 110"') to guide the first energy (110) to a presettable position of the separation device (200) and to emit the first energy (110, 210', 210", 210"') to the separation device (200) at this position;
wherein in a second state in which the first energy is supplied via the first energy supply device (101a), the amount of emitted first energy (110, 210', 210", 210"') determines the number of ions transported around the first energy guiding device (102a, 103a, 104a, 105a, 106a) by the separation device (200) and/or determines the number of ions which the separation device (200) let pass.

2. The ion dosage apparatus (100) of claim 1, wherein the number of transported ions is influenceable by an aperture of at least one opening (113) for a transport path in the first energy guiding device (102a, 103a, 104a, 105a, 106a) and/ or by the modification of an ion conductivity of the separation device (200).

3. The ion dosage apparatus (100) of claim 1 or 2, wherein the first energy guiding device (102a, 103a, 104a, 105a, 106a) is designed as a network with at least one lattice-like, honeycomb-shaped, and/or round opening (113).

4. The ion dosage apparatus (100) of one of claims 1 to 3, wherein the first energy guiding device (102a, 103a, 104a, 105a, 106a) is surrounded by the separation device (200), which can be destroyed by the transported first energy (110).

5. The ion dosage apparatus (100) of one of claims 1 to 4, wherein the first energy guiding device (102a, 103a, 104a, 105a, 106a) is an optical conductor, a thermal conductor, an electrical conductor and/or a conductor for an electromagnetic wave.

6. The ion dosage apparatus (100) of one of claims 1 to 5, wherein the first energy guiding device (102a, 103a, 104a, 105a, 106a) has high loss for transport of energy and/or a defined rate of coupling out the guided energy.

7. The ion dosage apparatus (100) of one of claims 1 to 6, wherein the separation device (200) comprises a polymer and/or wherein the separation device comprises material having an ion conductivity modifiable by an electrical field generated by the first energy guiding device (102a, 103a, 104a, 105a, 106a), in order to define the number of ions transported by the separation device (200) and/or the number of ions the separation device let pass.

8. The ion dosage apparatus (100) of one of claims 1 to 7, further comprising:
a second energy guiding device (102b, 103b, 104b, 105b, 106b, 107b, 108b, 109b) with a second energy supply device (101b),
wherein the second energy guiding device (102b, 103b, 104b, 105b, 106b, 107b, 108b, 109b) is arranged separated from the first energy guiding device (102a, 103a, 104a, 105a, 106a); and
wherein the second energy guiding device (102b, 103b, 104b, 105b, 106b, 107b, 108b, 109b) is adapted to specify the transport direction of the second energy in order to guide the second energy to a presettable position of the separation device (200) and to intensify and/or cancel out at this position the effect of the first energy (110) upon the separation device (200).

9. A method for producing an ion dosage apparatus (100) for a battery (400), comprising:
providing a first energy guiding device (102a, 103a, 104a, 105a, 106a) and a first energy supply device (101a),
wherein a first energy (110) is suppliable to the first energy guiding device (102a, 103a, 104a, 105a, 106a) via the first energy supply device (101a);
enveloping the first energy guiding device (102a, 103a, 104a, 105a, 106a) with a separation device (200);
in such a way that the separation device (200) is adapted in a first state in which no energy is supplied via the first energy supply device (101a) to block ions from being transported around the first energy guiding device (102a, 103a, 104a, 105a, 106a);
wherein the first energy guiding device (102a, 103a, 104a, 105a, 106a) is adapted to specify the transport direction of the first energy (110, 110', 110", 110"') in order to guide the first energy to a presettable position of the separation device (200) and to emit the first energy to the separation device (200) at this position; and
in such a way that in a second state in which the first energy is supplied via the first energy supply device (101a), the amount of emitted first energy (110, 210', 210", 210"') determines the number of ions transported around the first energy guiding device (102a, 103a, 104a, 105a, 106a) by the separation device (200) and/or the number of ions which the separation device (200) let pass.

10. An energy storage apparatus (400), comprising:
a first electrode (401);
a second electrode (402);
an ion transport device (405);
the ion dosage apparatus (100) according to one of claims 1 to 8;
wherein the ion dosage apparatus (100) is in contact with the ion transport device (405) in order to control a number of ions transported and/or blocked by the ion transport device (405);
wherein the ion dosage apparatus (100) is arranged between the first electrode (401) and the second electrode (402).

11. The energy storage apparatus (400) of claim 10, further comprising:
an active material (403, 404) arranged at the first electrode and the second electrode.

12. The energy storage apparatus (400) of claim 10 or 11, wherein the ion transport device (405) comprises a separator.

13. The energy storage apparatus (400) of claim 12, wherein the separator comprises a first ion conductivity and wherein the ion dosage apparatus (100) comprises a second ion conductivity;
wherein the second ion conductivity is greater than the first ion conductivity.

14. The energy storage apparatus (400) of one of claims 11 to 14, wherein the energy storage apparatus is a battery, a cylindrical cell, a prismatic cell and/or a coffee bag cell.

15. A flying object comprising an energy storage apparatus (400) of one of claims 10 to 14.

## Revendications

1. Dispositif de dosage d'ions (100) destiné à une batterie (400), comportant :
un premier moyen de guidage d'énergie (102a, 103a, 104a, 105a, 106a) doté d'un premier moyen d'alimentation en énergie (101a) ;
un moyen de séparation (200) ;
dans lequel le premier moyen de guidage d'énergie (102a, 103a, 104a, 105a, 106a) peut être alimenté en une première énergie (110) par le biais du premier moyen d'alimentation en énergie (101a) ;
dans lequel le moyen de séparation (200) enrobe le premier moyen de guidage d'énergie et est configuré pour, dans un premier état, dans lequel aucune énergie n'est alimentée par le biais du premier moyen d'alimentation en énergie (101a), bloquer des ions, qui seraient transportés au-delà du premier moyen de guidage d'énergie (102a, 103a, 104a, 105a, 106a) ;
dans lequel le premier moyen de guidage d'énergie (102a, 103a, 104a, 105a, 106a) est configuré pour définir la direction de transport de la première énergie (110, 110', 110", 110"'), pour conduire la première énergie (110) à une position prédéfinissable du moyen de séparation (200) et pour transmettre la première énergie (110, 210', 210", 210'") au moyen de séparation (200) en cette position ;
dans lequel, dans un second état, dans lequel la première énergie est alimentée par le biais du premier moyen d'alimentation en énergie (101a), la quantité de la première énergie transmise (110, 210', 201", 210"') détermine le nombre des ions transportés au-delà du premier moyen de guidage d'énergie (102a, 103a, 104a, 105a, 106a) par le moyen de séparation (200) et/ou détermine le nombre des ions que le moyen de séparation (200) a laissés passer.

2. Dispositif de dosage d'ions (100) selon la revendication 1, dans lequel le nombre des ions transportés peut être influencé par l'ouverture d'au moins un orifice (113) pour un chemin de transport dans le premier moyen de guidage d'énergie (102a, 103a, 104a, 105a, 106a) et/ou par la modification d'une conductivité ionique du moyen de séparation (200).

3. Dispositif de dosage d'ions (100) selon la revendication 1 ou 2, dans lequel le premier moyen de guidage d'énergie (102a, 103a, 104a, 105a, 106a) est réalisé sous la forme d'un réseau avec au moins un orifice (113) en forme de grille, en forme de nid d'abeilles et/ou rond.

4. Dispositif de dosage d'ions (100) selon l'une des revendications 1 à 3, dans lequel le premier moyen de guidage d'énergie (102a, 103a, 104a, 105a, 106a) est entouré du moyen de séparation (200), qui peut être détruit au moyen de la première énergie (110) transportée.

5. Dispositif de dosage d'ions (100) selon l'une des revendications 1 à 4, dans lequel le premier moyen de guidage d'énergie (102a, 103a, 104a, 105a, 106a) est un conducteur optique, un conducteur thermique, un conducteur électrique et/ou un conducteur pour une onde électromagnétique.

6. Dispositif de dosage d'ions (100) selon l'une des revendications 1 à 5, dans lequel le premier moyen de guidage d'énergie (102a, 103a, 104a, 105a, 106a) présente une perte élevée pour le transport d'énergie et/ou présente un taux de découplage défini de l'énergie guidée.

7. Dispositif de dosage d'ions (100) selon l'une des revendications 1 à 6, dans lequel le moyen de séparation (200) comporte un polymère et/ou dans lequel le moyen de séparation comporte un matériau, dont la conductivité ionique peut être modifiée au moyen d'un champ électrique généré par le premier moyen de guidage d'énergie (102a, 103a, 104a, 105a, 106a), pour déterminer le nombre des ions que le moyen de séparation (200) a transportés et/ou laissés passer.

8. Dispositif de dosage d'ions (100) selon l'une des revendications 1 à 7, comportant en outre :
un second moyen de guidage d'énergie (102b, 103b, 104b, 105b, 106b, 107b, 108b, 109b) doté d'un second moyen d'alimentation en énergie (101b) ;
dans lequel le second moyen de guidage d'énergie (102b, 103b, 104b, 105b, 106b, 107b, 108b, 109b) est disposé séparé du premier moyen de guidage d'énergie (102a, 103a, 104a, 105a, 106a) ; et
dans lequel le second moyen de guidage d'énergie (102b, 103b, 104b, 105b, 106b, 107b, 108b, 109b) est configuré pour prédéfinir la direction de transport de la seconde énergie, pour conduire la seconde énergie à une position prédéfinissable du moyen de séparation (200) et pour renforcer et/ou annuler l'effet de la première énergie (110) sur le moyen de séparation (200).

9. Procédé de fabrication d'un dispositif de dosage d'ions (100) destiné à une batterie (400), comportant :
la mise à disposition d'un premier moyen de guidage d'énergie (102a, 103a, 104a, 105a, 106a) et d'un premier moyen d'alimentation en énergie (101a) ;
dans lequel le premier moyen de guidage d'énergie (102a, 103a, 104a, 105a, 106a) peut être alimenté en une première énergie (110) par le biais du premier moyen d'alimentation en énergie (101a) ;
l'enrobage du premier moyen de guidage d'énergie (102a, 103a, 104a, 105a, 106a) avec un moyen de séparation (200) ;
de sorte que le moyen de séparation (200) est configuré pour, dans un premier état, dans lequel aucune énergie n'est alimentée par le biais du premier moyen d'alimentation en énergie (101a), bloquer des ions, qui seraient transportés au-delà du premier moyen de guidage d'énergie (102a, 103a, 104a, 105a, 106a) ;
dans lequel le premier moyen de guidage d'énergie (102a, 103a, 104a, 105a, 106a) est configuré pour prédéfinir la direction de transport de la première énergie (110, 110', 110", 110'"), pour conduire la première énergie à une position prédéfinissable du moyen de séparation (200) et pour transmettre la première énergie au moyen de séparation (200) en cette position ; et
de sorte que, dans un second état, dans lequel la première énergie est alimentée par le biais du premier moyen d'alimentation en énergie (101a), la quantité de la première énergie (110, 210', 210", 210"') transmise détermine le nombre des ions transportés au-delà du premier moyen de guidage d'énergie (102a, 103a, 104a, 105a, 106a) par le moyen de séparation (200) set/ou détermine le nombre des ions que le moyen de séparation (200) a laissés passer.

10. Dispositif de stockage d'énergie (400), comportant :
une première électrode (401) ;
une seconde électrode (402) ;
un moyen de transport d'ions (405) ;
le dispositif de dosage d'ions (100) selon l'une des revendications 1 à 8 ;
dans lequel le dispositif de dosage d'ions (100) est en contact avec le moyen de transport d'ions (405), pour contrôler un nombre d'ions transportés et/ou bloqués par le moyen de transport d'ions (405) ;
dans lequel le dispositif de dosage d'ions (100) est disposé entre la première électrode (401) et la seconde électrode (402).

11. Dispositif de stockage d'énergie (400) selon la revendication 10, comportant en outre un matériau actif (403, 404), qui est disposé sur la première électrode et la seconde électrode.

12. Dispositif de stockage d'énergie (400) selon la revendication 10 ou 11, dans lequel le moyen de transport d'ions (405) comporte un séparateur.

13. Dispositif de stockage d'énergie (400) selon la revendication 12, dans lequel le séparateur présente une première conductivité ionique et dans lequel le dispositif de dosage d'ions (100) présente une seconde conductivité ionique ;
dans lequel la seconde conductivité ionique est supérieure à la première conductivité ionique.

14. Dispositif de stockage d'énergie (400) selon l'une des revendications 11 à 14, dans lequel le dispositif de stockage d'énergie est réalisé sous la forme d'une batterie, d'une cellule cylindrique, d'une cellule prismatique et/ou d'une cellule sacoche.

15. Engin volant comprenant un dispositif de stockage d'énergie (400) selon l'une des revendications 10 à 14.
